# FASCICULE DE BREVET EUROPEEN

(11) **EP 3 839 600 B1**
(45) Date de publication et mention de la délivrance du brevet: **03.01.2024**
(21) Numéro de dépôt: 20214157.8
(22) Date de dépôt: 15.12.2020
(51) Int. Cl.: B64G 1/10, B64G 1/24, B64G 1/28, B64G 1/66, G02B 23/10, B64G 1/36, G01S 3/786, G02B 27/64

(54) **PROCEDE D'ESTIMATION PRECIS AVEC UNE DISPONIBILITE TOTALE DE LA LIGNE DE VISEE D'UN TELESCOPE EMBARQUE A BORD D'UN SATELLITE D'OBSERVATION DE LA TERRE**
VERFAHREN ZUR GENAUEN SCHÄTZUNG BEI TOTALER VERFÜGBARKEIT DER SICHTLINIE EINES TELESKOPS AN BORD EINES ERDBEOBACHTUNGSSATELLITEN
ACCURATE METHOD FOR ESTIMATION WITH TOTAL AVAILABILITY OF THE LINE OF SIGHT OF A TELESCOPE ON BOARD AN EARTH OBSERVATION SATELLITE

(30) Priorité: 19.12.2019 FR 1914843
(43) Date de publication de la demande: 23.06.2021
(73) Titulaire: Thales, 92400 Courbevoie (FR)
(72) Inventeur: DESLAEF, Nicolas, 06400 CANNES (FR); DELLANDREA, Brice, 06150 CANNES-LA-BOCCA (FR); DUCARNE, Julien, 06150 CANNES-LA-BOCCA (FR)
(74) Mandataire: Atout PI Laplace

(56) Documents cités:
- US-A- 6 158 694
- US-A1- 2007 023 579
- US-A1- 2013 193 303

## Description

La présente invention concerne un procédé d'estimation ou de restitution précise de la ligne de visée d'un télescope embarqué à bord d'un satellite d'observation et un satellite d'observation configuré pour mettre en oeuvre ledit procédé d'estimation ou de restitution de la ligne de visée du télescope.

L'invention se situe dans le domaine des Systèmes de Contrôle d'Attitude et d'Orbite SCAO (en anglais Attitude and Orbit Control System AOCS) de satellites d'observation et de la qualité Image des télescopes embarqués à bord desdits satellites d'observation.

Le système de contrôle d'orbite et d'attitude SCAO est un système qui permet de connaitre et d'orienter l'attitude du satellite par rapport à un trièdre de référence absolu.

La ligne de visée LdV (en anglais Line of Sight LOS) d'un télescope embarqué à bord d'un satellite d'observation est définie par une direction de pointage du télescope par rapport au même trièdre de référence. La mesure de la ligne de visée LdV, associée à des informations sur l'orbite du satellite, permet d'établir la correspondance entre chaque pixel d'une image acquise par le télescope et la position géographique de l'élément associé de la scène observée.

De manière classique, le trièdre de référence est un référentiel stellaire qui est observé via un ou plusieurs senseur(s) stellaire(s) dédié(s).

Ce ou ces senseurs stellaires forment une des composantes du système de Contrôle d'Attitude et d'Orbite SCAO qui permet de contrôler l'attitude du satellite en temps réel.

Les senseurs stellaires sont des caméras électroniques constituées d'un objectif optique et d'un capteur matriciel, dont le but est de prendre des images de zones du ciel. Après analyse de ce champ stellaire, en association avec un catalogue d'étoiles, il est alors possible d'évaluer l'orientation du satellite en valeur absolue dans un référentiel stellaire puis terrestre.

Plusieurs senseurs sont souvent associés pour accroitre la précision ou pour permettre de connaître l'attitude à tout moment alors qu'un des senseurs peut être inopérant, par exemple en étant ébloui par le soleil.

De manière classique et générale, un système d'estimation ou de restitution de la ligne de visée d'un télescope embarqué à bord d'un satellite d'observation comprend :
- un télescope, formant un dispositif d'imagerie, qui permet de prendre des images d'une scène observée d'un corps autour duquel le satellite orbite, et
- un système de contrôle d'attitude et d'orbite SCAO du satellite.

Le système de contrôle d'attitude et d'orbite SCAO du satellite comporte :
- un ensemble d'au moins un senseur stellaire fournissant au moins une mesure de l'attitude de la plateforme du satellite ; et
- des actionneurs pour orienter le satellite ; et
- un contrôleur qui fusionne les données d'attitude mesurées par le ou les senseurs stellaires et la mesure de vitesse angulaire pour déterminer l'attitude du satellite et élabore des commandes d'actionneurs pour suivre un profil souhaité d'évolution de l'attitude de la plateforme en fonction du temps.

Il est à remarquer que l'ensemble d'au moins un senseur stellaire(s) est le plus souvent composé de trois senseurs stellaires agencés de sorte à définir un trièdre de référence stellaire. Chaque senseur stellaire STR, dénommé en anglais « star tracker » peut être défini encore comme un petit télescope grand champ muni d'un système de repérage des étoiles qui permet de s'orienter sur la voûte céleste.

Il est à remarquer que le système de contrôle d'attitude et d'orbite SCAO du satellite peut comporter en supplément un ensemble d'au moins un gyroscope pour mesurer au moins une vitesse angulaire de la plateforme du satellite.

La performance de restitution de la ligne de visée LOS du télescope dépend de la mesure de l'attitude du satellite par le système de contrôle d'attitude et d'orbite SCAO et de la connaissance du biais angulaire, variable au cours du temps, existant entre la ligne de visée réelle du télescope et l'attitude du satellite, définie par l'orientation du trièdre de référence SCAO, mécaniquement distinct du télescope.

Ce biais est au minimum mesuré une fois au sol avant mise en orbite du satellite.

De manière connue, ce biais peut être estimé de manière précise en vol en utilisant par exemple une prise de vue des étoiles ou d'un amer et en comparant leur position dans l'image avec l'attitude estimée par le SCAO. Les deux mesures comparées sont deux mesures absolues et cette comparaison, pour être faite, nécessite un objet connu prédéterminé dans l'image.

Toutefois ce biais peut évoluer dans le temps et ne peut pas être mesuré trop souvent par le procédé de comparaison ci-dessus sans dégrader la disponibilité du service d'observation dans lequel des images de scène sont captées.

De plus, limiter par construction l'amplitude d'évolution de ce biais en rendant la structure mécanique de couplage entre le SCAO et le télescope plus rigide et plus complexe (senseurs stellaires très proches et disposés au niveau du miroir primaire à la base du télescope), en rendant le contrôle thermique plus complexe (choix de matériaux à bas coefficient de dilatation thermique et ajout des moyens de régulation thermique), conduit à une complexité et des coûts de fabrication plus élevés, voire à une augmentation de la masse du satellite avec une structure plus volumineuse, ce que l'on cherche à éviter.

Il est à remarquer que la demande de brevet WO 2013/182779 A1 propose un procédé qui stabilise la ligne de visée LdV d'un télescope avec une grande réactivité qui permet de compenser ses variations involontaires et en même temps permet de relâcher les contraintes mécaniques et thermiques entre le SCAO et le télescope. Ce procédé utilise des images qui sont saisies successivement par le capteur matriciel du télescope suivant un mode dit « rolling shutter » pour détecter les variations de la ligne de visée du télescope. Ce procédé est adapté pour détecter et compenser les variations involontaires de la ligne de visée du télescope, provoquées par des vibrations qui sont produites par des éléments mobiles du satellite tels que des actionneurs de contrôle ou une roue à filtres. Ces variations angulaires sont des variations hautes fréquences au moins supérieures ou égales à 10 Hz.

Toutefois ce procédé de stabilisation ne permet pas d'estimer l'évolution temporelle du biais angulaire existant entre la ligne de visée réelle du télescope et l'attitude du satellite définie par l'orientation du trièdre de référence SCAO, mécaniquement distinct du télescope, cette évolution temporelle étant due à l'évolution thermo-élastique de la structure mécanique reliant le SCAO et le télescope à des basses fréquences et très basses fréquences inférieures ou égales à 0,01 Hz.

Les documents US 2013/193303 A1, US 6 158 694 A et US 2007/023579 A1 proposent également des procédé de stabilisation de la ligne de visée.

Le problème technique général que résout l'invention est de fournir un procédé et un satellite permettant d'estimer l'évolution temporelle aux basses et très basses fréquences du biais angulaire existant entre la ligne de visée réelle du télescope et l'attitude du satellite définie par l'orientation du trièdre de référence SCAO, mécaniquement distinct du télescope.

En particulier le problème technique est d'estimer l'évolution des variations angulaires de la ligne de visée du télescope causées par les déformations thermo-élastiques de la structure de couplage mécanique du télescope aux SCAO de la plateforme du satellite.

A cet effet, l'invention a pour objet un procédé d'estimation de la ligne de visée d'un télescope embarqué à bord et partie d'un satellite d'observation de la Terre,
le satellite mettant en oeuvre le procédé comprenant une plateforme, un télescope, et un système de contrôle d'attitude et d'orbite SCAO de la plateforme,
le système de contrôle d'attitude et d'orbite SCAO de la plateforme comportant
   * un premier ensemble d'au moins un senseur(s) stellaire(s) fournissant une ou plusieurs mesures de l'attitude de la plateforme ; et
   * des actionneurs pour orienter la plateforme ; et
   * un premier calculateur configuré pour, à partir de la ou les plusieurs mesures d'attitude, fournies par le ou les senseurs stellaires, éventuellement fusionner les mesures, et/ou hybrider la ou les plusieurs mesures avec la mesure de vitesse angulaire d'un ou plusieurs gyroscopes, déterminer l'évolution de l'attitude du satellite, et élaborer des commandes d'actionneurs pour suivre un profil souhaité d'évolution de l'attitude de la plateforme en fonction du temps ; et
le télescope comportant
   * un deuxième calculateur, différent du premier calculateur ou fusionné avec le premier calculateur, configuré pour déterminer une mesure de bougé angulaire relatif du télescope à partir d'une paire d'images acquises par au moins un détecteur d'imagerie.

Le procédé d'estimation de la ligne de visée du télescope est caractérisé en ce qu'il comprend les étapes consistant à :
à partir d'un premier instant t1, mesurer régulièrement et de manière absolue par le SCAO l'attitude bruitée de la plateforme suivant une première cadence de mesure compatible avec le contrôle d'attitude de la plateforme, les besoins de restitution de la ligne de visée et la mesure de biais angulaire entre la ligne de visée réelle du télescope et lattitude réelle du satellite définie par l'orientation d'un trièdre de référence SCAO, et en parallèle, à partir d'un deuxième instant t2, déterminer régulièrement suivant une deuxième cadence de mesure, compatible avec la mesure du biais angulaire existant entre la ligne de visée réelle du télescope et l'attitude réelle du satellite définie par l'orientation du trièdre de référence SCAO, et optionnellement avec les besoins de restitution de la ligne de visée du téléscope, une mesure différentielle à bruit réduit de la ligne de visée du télescope à partir d'une paire d'images présentant une zone commune et non uniforme, acquises par l'au moins un détecteur d'imagerie, c'est-à-dire une mesure de bougé angulaire relatif à bruit réduit du télescope, puis à partir d'un troisième instant t3, postérieur ou égal aux premier et deuxième instants t1 et t2, estimer régulièrement le ou les biais angulaires existants entre la ligne de visée réelle du télescope et l'attitude réelle du satellite définie par l'orientation du trièdre de référence SCAO par une comparaison de la mesure différentielle relative très précise de la ligne de visée du télescope aux mesures non fusionnées absolues ou à la mesure fusionnée absolue de l'attitude de la plateforme qui prend en compte la qualité des mesures pour optimiser l'estimation.

Suivant des modes particuliers de réalisation, le procédé d'estimation de ligne de visée du télescope comprend l'une ou plusieurs des caractéristiques suivantes pris isolément ou en combinaison :
- l'estimation du biais angulaire existant entre la ligne de visée réelle du télescope et l'attitude réelle du satellite définie par l'orientation du trièdre de référence SCAO est mise en oeuvre par un filtre compris dans l'ensemble des filtres statistiques et de Kalman ;
- la mesure différentielle à bruit réduit de la ligne de visée du télescope est acquise à une fréquence comprise entre 0,01 Hz et 10 kHz, de préférence comprise entre 8 Hz et 1 kHz ;
- le procédé d'estimation de la ligne visée du télescope comprend en outre une étape d'estimation précise et absolue de plusieurs mesures non fusionnées ou d'une mesure fusionnée de l'évolution temporelle de la ligne de visée du télescope en ajoutant le ou les biais angulaire(s) estimé(s), existant(s) entre la ligne de visée réelle du télescope et l'attitude réelle du satellite définie par l'orientation du trièdre de référence SCAO, à l'attitude de la plateforme (6), mesurée régulièrement et de manière absolue par le SCAO, sous la forme de mesures différentes non fusionnées ou la forme d'une mesure fusionnée ;
- le procédé d'estimation de la ligne visée du télescope comprend en outre une étape supplémentaire de fusion des mesures non fusionnées de l'évolution temporelle de la ligne de visée du télescope dans laquelle est fournie une unique estimation fusionnée de la ligne de visée du télescope, optimisée en fonction de la qualité des mesures ;
- le procédé d'estimation de la ligne visée du télescope comprend en outre une étape d'estimation précise et absolue de plusieurs mesures non fusionnées ou d'une mesure fusionnée de l'évolution temporelle de la ligne de visée du télescope en ajoutant le ou les biais angulaire(s) estimé(s), existant(s) entre la ligne de visée réelle du télescope et l'attitude réelle du satellite, définie par l'orientation du trièdre de référence SCAO, à l'attitude de la plateforme, mesurée régulièrement et de manière absolue par le SCAO, sous la forme de mesures différentes non fusionnées ou la forme d'une mesure fusionnée, avec un filtrage du bruit haute fréquence par hybridation ;
- le procédé d'estimation de la ligne visée du télescope comporte en outre une étape supplémentaire de fusion des mesures non fusionnées filtrées de l'évolution temporelle de la ligne de visée du télescope dans laquelle est fournie une unique estimation fusionnée filtrée de la ligne de visée du télescope, optimisée en fonction de la qualité des mesures ;
- le procédé d'estimation de la ligne visée du télescope comporte en outre une étape de stabilisation de la ligne de visée du télescope mise en oeuvre à l'aide des actionneurs seuls du SCAO, ou d'un miroir de changement de ligne de visée du télescope) dont le positionnement est contrôlable par des commandes, ou de l'action conjointe des actionneurs du SCAO et d'un miroir, les commandes des actionneurs du SCAO et/ou du miroir de changement de ligne de visée étant fonction de l'évolution temporelle de la ligne de visée du télescope estimée précisément et de façon absolue et d'un profil de consigne de ligne de visée ;
- l'évolution temporelle de la ligne de visée du télescope estimée précisément et de façon absolue et d'un profil de consigne de ligne de visée n'est pas prise en compte pour stabiliser la ligne de visée du télescope par le SCAO mais est prise en compte lors du traitement des images du servie d'observation à bord du satellite ou au sol ;
- le procédé d'estimation de la ligne visée du télescope comprend en outre une étape d'estimation précise et absolue de la ligne de visée du télescope en utilisant une prise de vue d'étoiles ou d'un amer sous la forme d'une image suivi d'une comparaison de la position dans l'image desdites étoiles ou dudit amer avec l'attitude estimée par le SCAO ;
- l'étape de détermination régulière suivant la deuxième cadence de mesure d'une mesure différentielle à bruit réduit de la ligne de visée du télescope utilise un détecteur matriciel et compare une succession d'images d'une image à l'autre ; ou l'étape de détermination régulière suivant la deuxième cadence de mesure d'une mesure différentielle à bruit réduit de la ligne de visée du télescope utilise des détecteur de type barrette ou TDI pour une image défilante et utilise une zone inter-barrette, c'est à dire une partie des barettes situées de sorte que le même point dans la scène sera imagé lors du défilement par deux barrettes différentes à un intervalle de temps près.

L'invention a également pour objet un satellite d'observation de la Terre comprenant une plateforme, un télescope, et un système de contrôle d'attitude et d'orbite SCAO de la plateforme, le système de contrôle d'attitude et d'orbite SCAO de la plateforme comportant
* un premier ensemble d'au moins un senseur(s) stellaire(s) fournissant une ou plusieurs mesures d'attitude de la plateforme ; et
* des actionneurs pour orienter la plateforme ; et
* un premier calculateur configuré pour, à partir de la ou des plusieurs mesures d'attitudes, fournies par le ou les senseurs stellaires, éventuellement fusionner les mesures en une mesure fusionnée, éventuellement hybrider la mesure, fusionnée ou non, ou les plusieurs mesures avec la mesure de vitesse angulaire, déterminer l'évolution de l'attitude du satellite, et élaborer des commandes d'actionneurs pour suivre un profil souhaité d'évolution de l'attitude de la plateforme en fonction du temps ; et le télescope comportant
* un deuxième ensemble d'au moins un détecteur(s) d'imagerie ; et
* un deuxième calculateur, différent du premier calculateurou fusionné avec le premier calculateur, configuré pour déterminer une mesure de bougé angulaire relatif du télescope à partir d'une paire d'images acquises par au moins un détecteur d'imagerie.

Le satellite d'observation est caractérisé en ce qu'il comprend en outre un filtre et en ce que :
- le système de contrôle d'attitude et d'orbite SCAO est configuré pour, à partir d'un premier instant t1, mesurer régulièrement et de manière absolue l'attitude bruitée de la plateforme suivant une première cadence de mesure compatible avec le contrôle d'attitude de la plateforme, les besoins de restitution de la ligne de visée et la mesure de bias angulaire entre la ligne de visée réelle du télescope et l'attitude réelle du satellite définie par l'orientation d'un trièdre de référence SCAO, et
- le deuxième calculateur du télescope est configuré pour, à partir d'un deuxième instant t2 et en parallèle, déterminer régulièrement suivant une deuxième cadence de mesure, compatible avec la mesure du biais angulaire existant entre la ligne de visée réelle du télescope et l'attitude réelle du satellite définie par l'orientation du trièdre de référence SCAO, et optionnellement avec les besoins de restitution de la ligne de visée du télescope, une mesure différentielle à bruit réduit de la ligne de visée du télescope à partir d'une paire d'images présentant une zone commune et non uniforme, acquises par l'au moins un détecteur d'imagerie, c'est-à-dire une mesure de bougé angulaire relatif à bruit réduit du télescope, et
- le filtre est configuré pour, à partir d'un troisième instant t3, postérieur ou égal aux premier et deuxième instants t1 et t2, estimer régulièrement le ou les biais angulaire(s) existant(s) entre la ligne de visée réelle du télescope et l'attitude réelle du satellite définie par l'orientation du trièdre de référence SCAO par une comparaison de la mesure relative très précise de la ligne de visée du télescope aux mesures non fusionnées absolues ou à la mesure fusionnée absolue de l'attitude de la plateforme qui prend en compte la qualité des mesures pour optimiser l'estimation.

Suivant des modes particuliers de réalisation, le satellite d'observation de la Terre comprend l'une ou plusieurs des caractéristiques suivantes pris isolément ou en combinaison :
- le filtre est compris dans l'ensemble des filtres statistiques et de Kalman ; et la mesure différentielle à bruit réduit de la ligne de visée du télescope est acquise à une fréquence comprise entre 0,01 Hz et 10 kHz, de préférence comprise entre 8 Hz et 1 kHz ;
- le filtre est configuré pour estimer précisément et de façon absolue plusieurs mesures non fusionnées ou une mesure fusionnée de l'évolution temporelle de ligne de visée du télescope en ajoutant le ou les biais angulaire(s) estimé(s), existant(s) entre la ligne de visée réelle du télescope et l'attitude réelle du satellite définie par l'orientation du trièdre de référence SCAO, à l'attitude de la plateforme, mesurée régulièrement et de manière absolue par le SCAO, sous la forme de mesures différentes non fusionnées ou la forme d'une mesure fusionnée ;
- le satellite d'observation comprend en outre un filtre supplémentaire pour fusionner des mesures non fusionnées de l'évolution temporelle de la ligne de visée du télescope dans laquelle est fournie une unique estimation fusionnée de la ligne de visée du télescope, optimisée en fonction de la qualité des mesures ;
- le deuxième ensemble d'au moins un détecteur(s) d'imagerie comporte un détecteur matriciel, utilisé par le deuxième calculateur du télescope pour comparer une succession d'images d'une image à l'autre lors de la mise en oeuvre de la détermination régulière suivant la deuxième cadence de mesure d'une mesure différentielle à bruit réduit de la ligne de visée du télescope ; ou
le deuxième ensemble d'au moins un détecteur(s) d'imagerie comporte des détecteurs de type barrette ou TDI, utilisés par le deuxième calculateur en mode d'image défiante dans une zone inter-barrettes, c'est à dire une partie des barrettes située de sorte que le même point dans la scène est imagé lors du défilement par deux barrettes différentes à un intervalle de temps près lors de la mise en oeuvre de la détermination régulière suivant la deuxième cadence de mesure d'une mesure différentielle à bruit réduit de la ligne de visée du télescope ;
- le système de contrôle d'attitude et d'orbite SCAO de la plateforme comporte un troisième ensemble d'au moins un gyroscope pour mesurer au moins une vitesse angulaire de la plateforme du satellite, et
le système de contrôle d'attitude et d'orbite SCAO est configuré pour, à partir du premier instant, mesurer régulièrement et de manière absolue une attitude et une vitesse angulaire bruitée de la plateforme à l'aide du ou des senseurs stellaires et du ou des gyroscopes du troisième ensemble suivant une première cadence de mesure compatible avec le contrôle d'attitude de la plateforme, les besoins de restitution de la ligne de visée et la mesure de biais angulaire entre la ligne de visée réelle du télescope et l'attitude réelle du satellite définie par l'orientation du trièdre de référence SCAO ;
- le télescope comporte un quatrième ensemble d'au moins un gyroscope pour mesurer au moins une vitesse angulaire du télescope, et le deuxième calculateur du télescope est configuré pour à partir du deuxième instant t2, déterminer suivant la deuxième cadence de mesure une mesure inertielle de bougé angulaire relatif à bruit réduit du télescope, complémentaire à la mesure optique de bougé angulaire relatif obtenue à partir des paires d'images, et déterminer la mesure relative très précise de la ligne de visée du télescope en fonction de la mesure inertielle et la mesure optique de bougé angulaire relatif du télecope ;
- le système de contrôle d'attitude et d'orbite SCAO est configuré pour stabiliser la ligne de visée du télescope sous l'action de ses seuls actionneurs, les commandes des actionneurs du SCAO étant fonction de l'évolution temporelle de la ligne de visée du télescope estimée précisément et de façon absolue et d'un profil de consigne de la ligne de visée du télescope ; ou le télescope comporte un miroir de changement de ligne de visée du télescope dont le positionnement est contrôlable par des commandes et configuré pour stabiliser seul la ligne de visée du télescope, les commandes du miroir de changement de visée étant fonction de l'évolution temporelle de la ligne de visée du télescope estimée précisément et de façon absolue et d'un profil de consigne de la ligne de visée du télescope ; ou le télescope comporte un miroir de changement de ligne de visée du télescope dont le positionnement est contrôlable par des commandes, et la ligne de visée du télescope est stabilisée sous l'action conjointe partagée des actionneurs du SCAO et du miroir de changement de ligne de visée, les commandes des actionneurs du SCAO et du miroir de changement de ligne de visée étant fonction de l'évolution temporelle de la ligne de visée du télescope estimée précisément et de façon absolue et d'un profil de consigne de ligne de visée ;
- le premier calculateur, le deuxième calculateur et le filtre sont des circuits électroniques différents et séparés ; ou le premier calculateur et le deuxième sont un même calculateur électronique, et filtre est un circuit électronique séparé ; ou le premier calculateur et le deuxième calculateur sont un même calculateur électronique, et le filtre est intégré dans ledit calculateur ; ou le premier calculateur et le deuxième calclulateur sont des circuits électroniques différents et le filtre est intégré dans le premier calculateur ; ou le premier calculateur et le deuxième calculateur sont des circuits électroniques différents et le filtre est intégré dans le second calculateur.

L'invention sera mieux comprise à la lecture de la description de plusieurs formes de réalisation qui va suivre, donnée uniquement à titre d'exemple et faite en se référant aux dessins sur lesquels :
La figure 1 est une vue d'une première forme de réalisation d'un satellite d'observation de la Terre selon l'invention ;
La figure 2 est une vue d'un sous-système du satellite de la figure configuré pour mettre en oeuvre un procédé d'estimation de la ligne de visée d'un télescope selon l'invention ;
La figure 3 est un ordinogramme d'un procédé d'estimation de la ligne de visée d'un télescope selon l'invention pouvant être mis en oeuvre notamment par le satellite de la figure 1 ;
La figure 4 est une vue synthétique de différents modes de mesure pouvant contribuer au procédé d'estimation de la ligne de visée selon l'invention de la figure 3 ;
La figure 5 est une vue d'une deuxième forme de réalisation d'un satellite d'observation de la Terre selon l'invention ; et
La figure 6 est une vue d'une troisième forme de réalisation d'un satellite d'observation de la Terre selon l'invention.

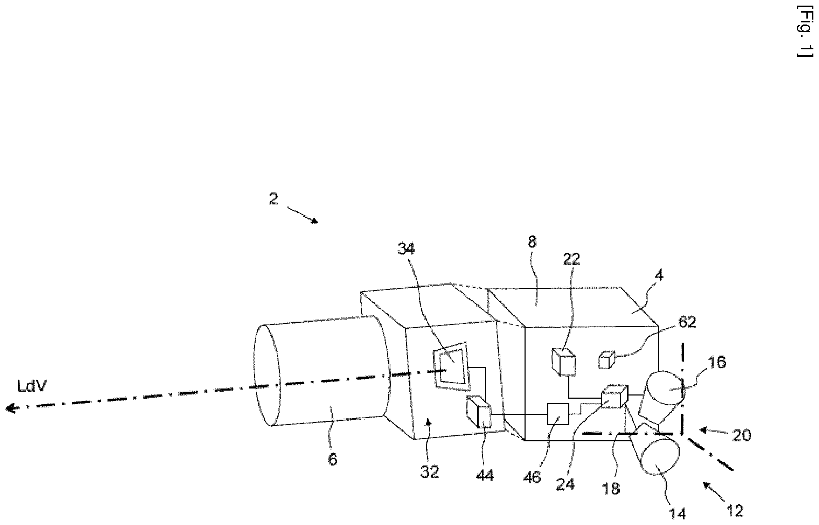

Suivant la figure 1 et une première forme de réalisation, un satellite 2 d'observation de la Terre comprend une plateforme 4, un télescope 6, et un système de contrôle d'attitude et d'orbite SCAO 8 de la plateforme 4.

Le système de contrôle d'attitude et d'orbite SCAO 8 de la plateforme 4 comporte :
- un premier ensemble STR 12 d'au moins un senseur(s) stellaire(s) 14, 16, 18 fournissant au moins une mesure de l'attitude de la plateforme 4, et définissant un trièdre de référence SCAO 20, et
- des actionneurs 22 pour orienter la plateforme 4 ; et
- un premier calculateur 24, configuré pour fusionner des données d'attitude mesurées par le ou les senseurs stellaires 14, 16, 18, et de la mesure de vitesse angulaire pour déterminer l'attitude du satellite 2 et élaborer des commandes d'actionneurs pour suivre un profil souhaité d'évolution de l'attitude de la plateforme 4 en fonction du temps.

Le télescope 6 comporte :
- un deuxième ensemble 32 d'au moins un détecteur(s) d'imagerie 34, ici un seul détecteur matriciel d'imagerie étant représenté ;
- un deuxième calculateur 44 configuré pour déterminer une mesure de bougé angulaire relatif du télescope à partir d'une paire d'images acquises par au moins un détecteur d'imagerie 34.

Le satellite d'observation 2 comprend en outre un filtre 46 configuré pour recevoir et traiter les données de mesures élaborées par le premier calculateur 24 et le deuxième calculateur 44.

Le système de contrôle d'attitude et d'orbite SCAO 8 est configuré pour, à partir d'un premier instant t1, mesurer régulièrement et de manière absolue l'attitude bruitée de la plateforme 4 par un ou plusieurs senseurs stellaires, ici les senseurs stellaires 14, 16, 18, dont les mesures sont fusionnées par le premier calculateur 24, suivant une première cadence de mesure compatible avec le contrôle de l'attitude de la plateforme, les besoins de restitution de la ligne de visée, et avec la mesure du biais angulaire entre la ligne de visée réelle du télescope et l'attitude réelle du satellite définie par l'orientation du trièdre 20 de référence SCAO.

Le deuxième calculateur 44 du télescope 6 est configuré pour, à partir d'un deuxième instant t2 et en parallèle de l'aquisition par le SCAO 8 de mesures fusionnées d'attitude de la plateforme, déterminer régulièrement suivant une deuxième cadence de mesure, compatible avec la mesure du biais angulaire entre la ligne de visée réelle du télescope et l'attitude réelle du satellite définie par l'orientation du trièdre 20 de référence SCAO, et optionnellement avec les besoins de restitution de la ligne de visée, une mesure différentielle à bruit réduit de la ligne de visée du télescope à partir d'une paire d'images présentant une zone commune et non uniforme, acquises par l'au moins un détecteur d'imagerie, c'est-à-dire une mesure de bougé angulaire relatif à bruit réduit du télescope 6.

Le filtre 46 est configuré pour, à partir d'un troisième instant t3, postérieur ou égal aux premier et deuxième instants t1 et t2, estimer régulièrement le biais angulaire existant entre la ligne de visée réelle du télescope et l'attitude réelle du satellite définie par l'orientation du trièdre 20 de référence SCAO par une comparaison de la mesure relative très précise de la ligne de visée du télescope à la mesure absolue de l'attitude de la plateforme en prenant en compte la qualité des deux mesures pour optimiser l'estimation.

En variante le système de contrôle d'attitude et d'orbite SCAO est configuré pour, à partir d'un premier instant t1, mesurer régulièrement et de manière absolue l'attitude bruitée de la plateforme 4 par plusieurs viseurs stellaires dont les mesures ne sont pas fuisionnées. Dans ce cas, le trièdre de référence SCAO sera défini soit en prenant l'un des viseurs stellaires comme référence, soit en prenant leur repère moyen comme référence. Le filtre 46 est alors configuré pour, à partir d'un troisième instant t3, postérieur ou égal aux premier et deuxième instants t1 et t2, estimer régulièrement les mutliples biais angulaires existants entre la ligne de visée réelle du télescope et les différentes mesures de l'attitude réelle du satellite, associés à chacun des viseurs stellaires, en prenant en compte la qualité des mesures pour optimiser l'estimation.

Le filtre 46 est compris dans l'ensemble des filtres statistiques et de Kalman. De manière préférée le filtre 46 est un filtre de Kalman.

Le deuxième ensemble 32 d'au moins un détecteur(s) d'imagerie comporte ici un détecteur matriciel 34, utilisé par le deuxième calculateur 44 du télescope 6 pour comparer une succession d'images d'une image à l'autre lors de la mise en oeuvre de la détermination régulière suivant la deuxième cadence de mesure d'une mesure différentielle à bruit réduit de la ligne de visée du télescope 6.

En variante, le deuxième ensemble 32 d'au moins un détecteur(s) d'imagerie comporte des détecteurs de type barrette ou TDI, utilisés par le deuxième calculateur en mode d'image défilante dans une zone inter-barrettes, c'est à dire une partie des barrettes située de sorte que le même point dans la scène est imagé lors du défilement par deux barrettes différentes à un intervalle de temps près lors de la mise en oeuvre de la détermination régulière suivant la deuxième cadence de mesure d'une mesure différentielle à bruit réduit de la ligne de visée du télescope.

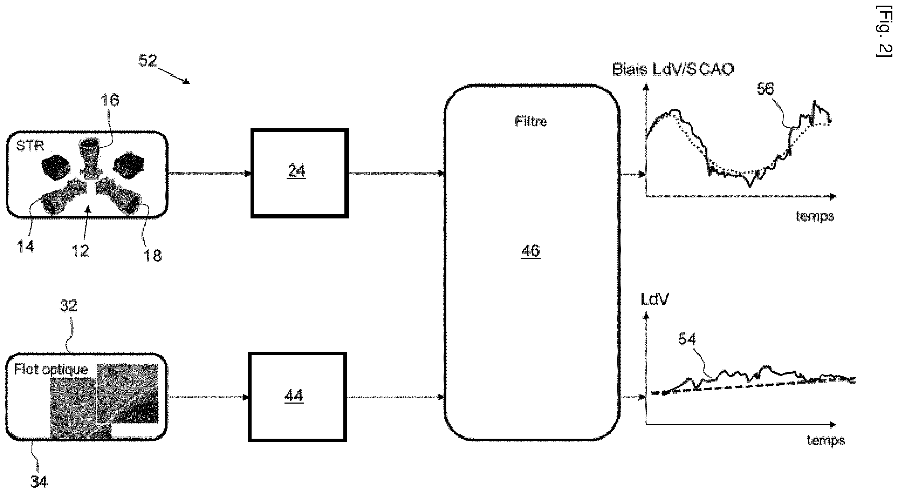

Suivant les figures 1 et 2, le premier ensemble 12 des trois senseurs stellaires 14, 16, 18 et le premier calculateur 24 connectés entre eux, le deuxième ensemble 32 d'au moins un détecteur(s) d'imagerie 34 et le deuxième calculateur 44 connectés entre eux, le filtre de Kalman 46 forment un sous-système 52 du satellite d'observation 2 apte à mettre en oeuvre un procédé d'estimation de la ligne de visée d'un télescope selon l'invention.

Suivant la figure 2, le filtre de Kalman 46 est configuré pour estimer précisément et de manière absolue l'évolution temporelle 54 de la ligne de visée LdV du télescope 6 en ajoutant le biais de variation angulaire estimé 56, existant entre la ligne de visée réelle du télescope 6 et l'attitude réelle du satellite 2 définie par l'orientation du trièdre de référence SCAO, à l'attitude de la plateforme 6, mesurée régulièrement et de manière absolue par le SCAO.

Le filtre de Kalman 46 est configuré pour fournir en sortie l'estimation de l'évolution temporelle 54 de la ligne de visée LdV du télescope et du biais angulaire estimé 56 entre la ligne de visée réelle LdV du télescope 6 et l'attitude réelle du satellite 2.

De manière optionnelle, l'évolution temporelle 54 de la ligne de visée (LdV) du télescope 6 sera ensuite ou simultanément filtrée par hybridation. De cette manière, l'évolution en basses fréquences de ladite LdV restera inchangée, mais son évolution en haute fréquences sera obtenue à partir de la mesure différentielle à bruit réduit de la ligne de visée du télescope 6 pour avantageusement en améliorer la précision.

En variante, si plusieurs mesures de viseurs stellaires non fusionnées sont utilisées, le filtre de Kalman 46 est alors configuré pour fournir plusieurs mesures estimées, précises et absolues, de l'évolution temporelle de la ligne de visée LdV du télescope 6, chacune des mesures étant associée à l'un des senseurs stellaires.

En option de cette variante, le filtre de Kalman 46 est complété par un filtre fusionnant ces mesures pour fournir une seule estimation fusionnée de la ligne de visée LdV du télescope, et optimisée en prenant en compte la qualité des mesures.

Suivant la figure 1 et de manière optionnelle le système de contrôle d'attitude et d'orbite SCAO 8 de la plateforme 4 comporte un troisième ensemble 62 d'au moins un gyroscope(s) pour mesurer au moins une vitesse angulaire de la plateforme 6 du satellite 2.

Le système de contrôle d'attitude et d'orbite SCAO 8 est configuré pour, à partir du premier instant t1, mesurer régulièrement et de manière absolue une attitude et un vitesse angulaire bruitée de la plateforme à l'aide du ou des senseurs stellaires 14, 16, 18, et du ou des gyroscopes du troisième ensemble 62 suivant une première cadence de mesure compatible avec le contrôle d'attitude de la plateforme, les besoins de restitution de la ligne de visée, et en particuler avec la mesure du biais angulaire entre la ligne de visée réelle du télescope et l'attitude réelle du satellite définie par l'orientation du trièdre 20 de référence SCAO.

Il est à remarquer que la SCAO 8 de la figure 1 peut être configuré pour stabiliser la ligne de visée du télescope sous l'action de ses seuls actionneurs 22, les commandes des actionneurs du SCAO étant fonction de l'évolution temporelle de la ligne de visée du télescope estimée précisément et absolument de façon absolue et d'un profil de consigne de la ligne de visée du telescope 6.

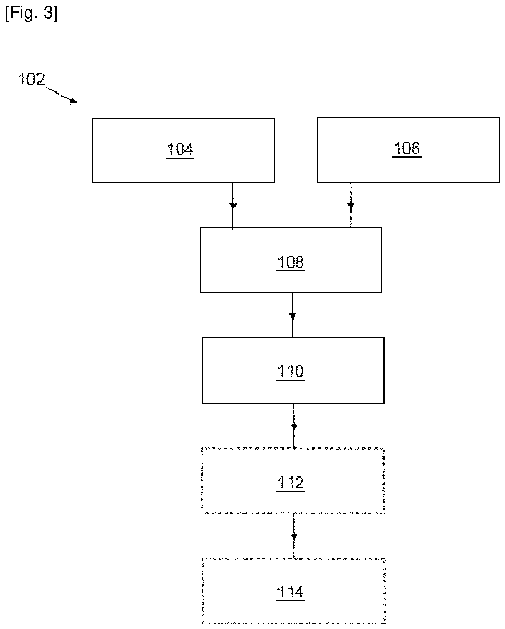

Suivant la figure 3, un procédé d'estimation 102 de la ligne de visée LdV d'un télescope 6 embarqué à bord et partie d'un satellite d'observation de la Terre 2 tel que décrit dans la figure 1 comprend un ensemble d'étapes.

Dans une première étape 104, à partir d'un premier instant t1, l'attitude bruitée de la plateforme 4 est mesurée régulièrement et de manière absolue par le SCAO 8 suivant une première cadence de mesure compatible avec le contrôle d'attitude de la plateforme, les besoins de restitution de la ligne de visée, et en particuler avec la mesure du biais angulaire entre la ligne de visée réelle du télescope et l'attitude réelle du satellite définie par l'orientation du trièdre 20 de référence SCAO.

Dans une deuxième étape 106, exécutée en parallèle de la première étape 104, à partir d'un deuxième instant t2, une mesure différentielle à bruit réduit de la ligne de visée LdV du télescope 6, i.e. une mesure de bougé angulaire relatif à bruit réduit du télescope, est déterminée régulièrement suivant une deuxième cadence de mesure, compatible avec la mesure du biais angulaire existant entre la ligne de visée réelle du télescope et l'attitude réelle du satellite définie par l'orientation du trièdre de référence SCAO, et optionnellement avec les besoins de restitution de la ligne de visée. Cette mesure différentielle à bruit réduit de la ligne de visée LdV du télescope 6 est déterminée régulièrement à partir d'une paire d'images présentant une zone commune et non uniforme, acquises par l'au moins un détecteur d'imagerie. Dans cette deuxième étape, le bougé angulaire des images décrivant un flot optique est effectué sans amer avec mesure des vitesses « moyennes » de rotations en prise de vue.

La mesure différentielle à bruit réduit de la ligne de visée du télescpope 6, ou mesure du bougé angulaire relatif à bruit réduit du télescope 6, est acquise à fréquence comprise entre 0,01 Hz et 10 kHz, et de préférence comprises entre 8 Hz et 1 kHz.

Ensuite dans une troisième étape 108, à partir d'un troisième instant t3, postérieur ou égal aux premier et deuxième instants t1 et t2 le biais angulaire existant entre la ligne de visée réelle du télescope et l'attitude réelle du satellite définie par l'orientation du trièdre de référence SCAO est estimée régulièrement par une comparaison de la mesure relative très précise de la ligne de visée du télescope à la mesure absolue de l'attitude de la plateforme qui prend en compte la qualité des deux mesures pour optimiser l'estimation.

L'estimation du biais de variation angulaire existant entre la ligne de visée réelle du télescope (6) et l'attitude réelle du satellite (2) définie par l'orientation du trièdre de référence SCAO 20 est mise en oeuvre par un filtre 46 compris dans l'ensemble des filtres statistiques et de Kalman.

Dans une quatrième étape 110, postérieure à la troisième étape 108, l'évolution temporelle de ligne de visée du télescope est estimée précisément et de manière absolue en ajoutant le biais angulaire estimé, existant entre la ligne de visée réelle du télescope et l'attitude réelle du satellite définie par l'orientation du trièdre de référence SCAO, à l'attitude de la plateforme 6, mesurée régulièrement et de manière absolue par le SCAO. Cette estimation est effectuée dans la figure 2. En variante, elle peut être effectuée par le premier calculateur 24.

En variante, la quatrième étape 110 peut être remplacée par une étape d'estimation précise et absolue de l'évolution temporelle de ligne de visée du télescope dans laquelle le biais angulaire estimé existant entre la ligne de visée réelle du télescope et l'attitude réelle du satellite, définie par l'orientation du trièdre de référence SCAO, est ajouté à l'attitude de la plateforme 6, mesurée régulièrement et de manière absolue par le SCAO avec le bruit haute fréquence, cette somme étant filtrée par hybridation. De cette manière, l'évolution en basses fréquences, i.e.pour des fréquences inférieures ou égales à 0,01 Hz, restera inchangée, mais l'évolution en hautes fréquences, i.e. au dessus de 8 Hz, sera obtenue à partir de la mesure différentielle à bruit réduit de la ligne de visée du télescope 6 pour en améliorer la précision.

En variante, si plusieurs mesures de viseurs stellaires non fusionnées sont utilisées dans la troisième étape 108, les multiples biais angulaires existants entre la ligne de visée réelle du télescope et les différentes mesures de l'attitude réelle du satellite, associés à chacun des viseurs stellaires, sont estimés. Dans la quatrième étape, plusieurs mesures précises et absolues, de l'évolution temporelle de la ligne de visée LdV du télescope, sont estimées, chacune des mesures étant associée à l'un des viseurs stellaires.

En option de cette variante, la quatrième étape 110 est complétée par une étape supplémentaire où une seule mesure de la ligne de visée LdV du télescope est estimée en fusionnant les différentes mesures associées aux différents viseurs stellaires.

En option, le procédé d'estimation 102 de la ligne de visée du télescope 6 comprend une cinquième étape 112 de stabilisation de la ligne de visée du télescope 6. Elle peut être mise en oeuvre à l'aide des actionneurs seuls du SCAO, ce qui est le cas pour le satellite 2 de la figure 1 dont le télescope 6 est dépourvu d'un miroir de changement de ligne de visée. Lorsque le télescope est muni d'un miroir de changement de ligne de visée, la cinquième étape 112 de stabilisation de la ligne de visée du télescope peut être mise en oeuvre sous l'action du miroir de changement de ligne de visée du télescope dont le positionnement est contrôlable par des commandes, ou sous l'action conjointe des actionneurs du SCAO et d'un miroir. Les commandes des actionneurs du SCAO et/ou du miroir de changement de ligne de visée sont fonction de l'évolution temporelle de la ligne de visée du télescope estimée précisément et de façon absolue et d'un profil de consigne de ligne de visée.

En variante de cette option, l'évolution temporelle de la ligne de visée du télescope estimée précisément et de façon absolue et d'un profil de consigne de ligne de visée n'est pas prise en compte pour stabiliser la ligne de visée du télescope par le SCAO mais est prise en compte lors du traitement des images du servie d'observation à bord du satellite ou au sol.

En option également, le procédé d'estimation 102 de la ligne de visée du télescope 6 comprend une sixième étape 114 d'estimation précise et absolue de la ligne de visée du télescope en utilisant une prise de vue d'étoiles ou d'un amer sous la forme d'une image suivi d'une comparaison de la position dans l'image desdites étoiles ou dudit amer avec l'attitude estimée par le SCAO.

De manière générale, la deuxième étape de détermination régulière d'une mesure différentielle à bruit réduit de la ligne de visée du télescope suivant la deuxième cadence de mesure utilise de manière préférée un détecteur matriciel et compare une succession d'images d'une image à l'autre lorsque l'orbite du satellite d'observation est géostationnaire. Lorsque le satellite d'observation défilant, en particulier décrit une orbite basse LEO (en anglais Low Earth Orbit), la deuxième étape de détermination régulière d'une mesure différentielle à bruit réduit de la ligne de visée du télescope suivant la deuxième cadence de mesure utilise de manière préférée des détecteurs de type barrette ou TDI pour une image défilante et utilise une zone inter-barrette, c'est à dire une partie des barrettes situées de sorte que le même point dans la scène sera imagé lors du défilement par deux barrettes différentes à un intervalle de temps près.

Par l'utilisation du procédé d'estimation 102 de la ligne de visée du télescope selon l'invention, les variations thermo-élastiques existantes entre les senseurs stellaires et le télescope à des basses fréquences et très basses fréquences, i.e. à des fréquences inférieures à 0,01 HZ, sont estimées.

En estimant à bord du satellite les attitudes relatives des senseurs SCAO, le procédé d'estimation 102 selon l'invention permet de bien pointer le satellite et de connaître précisément son pointage, tout en permettant de relâcher les fortes contraintes sur la stabilité d'attitude relative entre les senseurs SCAO et la ligne de visée.

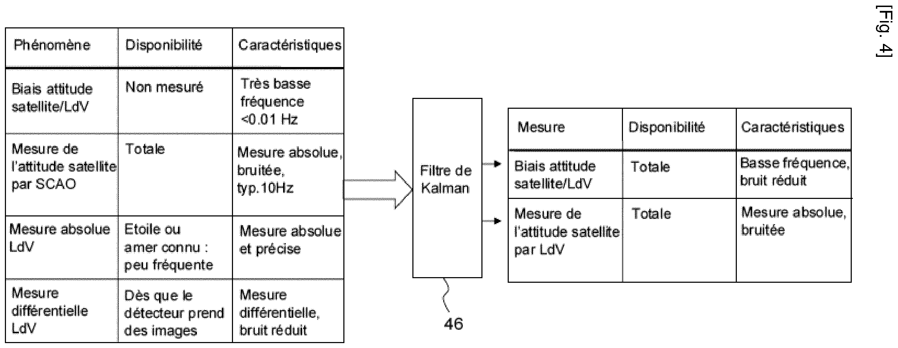

Suivant la figure 4, les divers modes de mesures servant d'entrée du filtre de traitement 46, par exemple un filtre de Kalman, sont illustrés et analysées pour chaque mesure en termes de disponibilité, de caractéristiques spectrales du signal utile mesuré et/ou de bruit, et du caractère absolu/relatif de la mesure.

Suivant la figure 4, les deux mesures pertinentes, estimées et fournies en sortie par le filtre 46 avec une totale disponibilité, et qui permettent de relâcher les contraintes sur la stabilité des attitudes relatives des senseurs SCAO, i.e. stabilité entre eux et stabilité par rapport à la ligne de visée du télescope, et d'assurer les performances de pointage et de géo-localisation, sont identifiées et caractérisées en termes de spectre du signal utile estimé et/ou spectre du bruit.

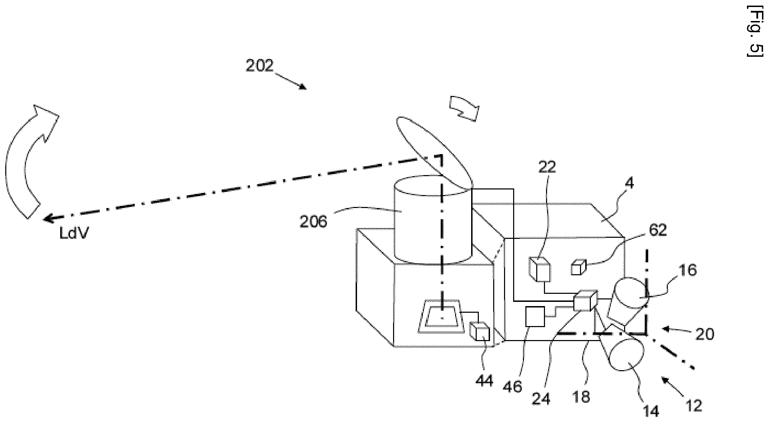

Suivant la figure 5 et une deuxième forme de réalisation du satellite d'observation de la Terre, le satellite d'observation de la Terre 202 est dérivé du satellite d'observation 2 de la première forme de réalisation décrit dans la Figure 1.

Le satellite d'observation 202 diffère du satellite 2 en ce que le télescope 6, dépourvu d'un miroir de changement de visée, est remplacé par un télescope 206 muni d'un miroir 212 de changement de ligne de visée dont le positionnement est contrôlable par des commandes.

Ici, le satellite 202 est configurée pour stabiliser la ligne de visée LdV du télescope sous l'action conjointe partagée des actionneurs 22 du SCAO 8 et du miroir 212 de changement de ligne de visée, les commandes des actionneurs 22 du SCAO 8 et du miroir 212 de changement de ligne de visée étant fonction de l'évolution temporelle de la ligne de visée du télescope estimée précisément et de façon absolue et d'un profil de consigne de ligne de visée.

En variante, le satellite 202 est configuré pour stabiliser la ligne de visée du télescope 206 sous la seule action du miroir de changement de ligne de visée, les commandes du miroir de changement de visée étant fonction de l'évolution temporelle de la ligne de visée du télescope estimée précisément et de façon absolue et d'un profil de consigne de la ligne de visée du télescope.

Il est à remarquer que dans le cas de l'utilisation d'un miroir de changement de visée, les informations de position de ce miroir devront être connues par le système lors des phases de stabilisation. En dehors des phases de stabilisation, le stabilisateur doit passer dans un mode « mesure seule » et fournir l'information à l'estimateur du biais relatif en la ligne de visée et l'attitude mesuré par le SCAO.

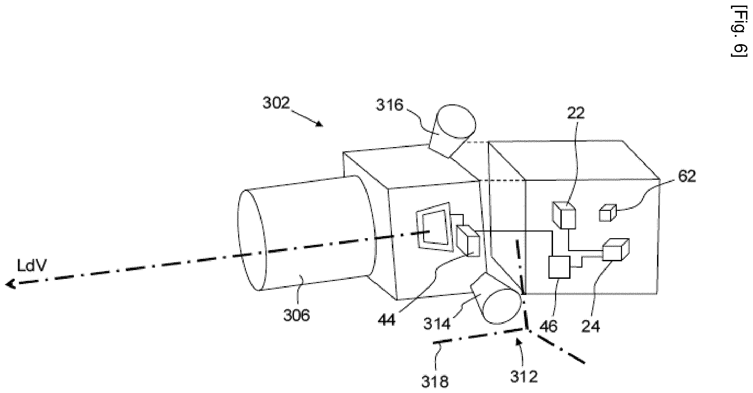

Suivant la figure 6 et une troisième forme de réalisation du satellite d'observation de la Terre, le satellite d'observation de la Terre 302 est dérivé du satellite d'observation 2 de la première forme de réalisation décrit dans la figure 1.

Le satellite d'observation 302 diffère du satellite 2 en ce que les senseurs stellaires 14, 16, 18 du SCAO, solidaires de la plateforme 4 et éloignés du télescope 6 sont remplacés par des senseurs stellaires 314, 316, 318, solidaires du télescope 306 et disposés au niveau de la base primaire du télescope 306 à proximité de l'interface avec la plateforme 4.

Suivant une variante, indépendante du choix des première, deuxième, troisième formes de réalisation du satellite d'observation, le télescope comporte un quatrième ensemble d'au moins un gyroscope hautes fréquences pour mesurer au moins une vitesse angulaire du télescope.

Dans cette variante, le deuxième télescope est configuré pour, à partir du deuxième instant t2, déterminer suivant la deuxième cadence de mesure une mesure inertielle du bougé angulaire relatif à bruit réduit du télescope, complémentaire à la mesure optique de bougé angulaire relatif obtenue à partir des paires d'images, et déterminer la mesure relative très précise de la ligne de visée du télescope en fonction de la mesure inertielle et la mesure optique du bougé angulaire relatif.

Il est à remarquer que dans les première, deuxième, troisième formes de réalisation du satellite d'observation selon l'invention, le premier calculateur, le deuxième calculateur et le filtre sont des circuits électroniques différents.

Suivant une première variante, le premier calculateur et le deuxième sont un même calculateur électronique, et filtre est un circuit électronique séparé.

Suivant une deuxième variante, le premier calculateur et le deuxième sont un même calculateur électronique, et le filtre est intégré dans ledit calculateur.

Suivant une troisième variante, le premier calculateur et le deuxième calculateur sont deux calculateurs électroniques séparés, et le filtre est intégré dans le premier calculateur.

Suivant une quatrième variante, le premier calculateur et le deuxième calculateur sont deux calculateurs électroniques séparés, et le filtre est intégré dans le deuxième calculateur.

De manière avantageuse, le filtre permet d'estimer la partie basse fréquence de la différence entre la ligne de visée télescope et l'attitude satellite.

De manière avantageuse, le procédé selon l'invention, décrit ci-dessus permet d'estimer, à bord et sans manoeuvre de calibrations, les attitudes relatives entre les senseurs SCAO suffisamment précisément pour pouvoir relâcher les fortes contraintes sur leur stabilité, tout en permettant de bien pointer le satellite et de connaître précisément son pointage.

## Revendications

1. Procédé d'estimation de la ligne de visée d'un télescope embarqué à bord et partie d'un satellite (2) d'observation de la Terre,
le satellite (2) mettant en oeuvre le procédé comprenant une plateforme (4), un télescope (6 ; 206 ; 306), et un système de contrôle d'attitude et d'orbite SCAO (8) de la plateforme (4),
le système de contrôle d'attitude et d'orbite SCAO (8) de la plateforme (4) comportant :
- un premier ensemble (12 ; 312) d'au moins un senseur(s) stellaire(s) (14, 16, 18, 314, 316, 318) fournissant une ou plusieurs mesures de l'attitude de la plateforme (4) ; et
- des actionneurs (22) pour orienter la plateforme (4) ; et
- un premier calculateur (24) configuré pour, à partir de la ou les plusieurs mesures d'attitude, fournies par le ou les senseurs stellaires (14, 16, 18), déterminer l'évolution de l'attitude du satellite (2), et élaborer des commandes d'actionneurs pour suivre un profil souhaité d'évolution de l'attitude de la plateforme (4) en fonction du temps ; et
le télescope (6 ; 206 ; 306) comportant :
- un deuxième ensemble (32) d'au moins un détecteur(s) d'imagerie (34) ; et
- un deuxième calculateur (44), différent du premier calculateur (24) ou fusionné avec le premier calculateur (24), configuré pour déterminer une mesure de bougé angulaire relatif du télescope (6 ; 206 ; 306) à partir d'une paire d'images acquises par au moins un détecteur d'imagerie (34) ;
le procédé d'estimation de la ligne de visée du télescope (6 ; 206 ; 306) étant **caractérisé en ce qu'**il comprend les étapes consistant à :
- à partir d'un premier instant t1, mesurer (104) régulièrement et de manière absolue par le SCAO l'attitude bruitée de la plateforme (4) suivant une première cadence de mesure compatible avec le contrôle d'attitude de la plateforme, les besoins de restitution de la ligne de visée et la mesure de biais angulaire entre la ligne de visée réelle du télescope (6) et lattitude réelle du satellite (2) définie par l'orientation d'un trièdre (20) de référence SCAO, et en parallèle, à partir d'un deuxième instant t2, déterminer (106) régulièrement suivant une deuxième cadence de mesure, compatible avec la mesure du biais angulaire existant entre la ligne de visée réelle du télescope (6) et l'attitude réelle du satellite (2) définie par l'orientation du trièdre (20) de référence SCAO, et optionnellement avec les besoins de restitution de la ligne de visée du téléscope, une mesure différentielle à bruit réduit de la ligne de visée du télescope (6) à partir d'une paire d'images présentant une zone commune et non uniforme, acquises par l'au moins un détecteur d'imagerie (34), c'est-à-dire une mesure de bougé angulaire relatif à bruit réduit du télescope, puis
- à partir d'un troisième instant t3, postérieur ou égal aux premier et deuxième instants t1 et t2, estimer régulièrement, en utilisant un filtre (46), le ou les biais angulaires existants entre la ligne de visée réelle du télescope (6) et l'attitude réelle du satellite (2) définie par l'orientation du trièdre (20) de référence SCAO par une comparaison de la mesure différentielle relative très précise de la ligne de visée du télescope (6) aux mesures non fusionnées absolues ou à la mesure fusionnée absolue de l'attitude de la plateforme (4).

2. Procédé d'estimation de la ligne de visée d'un télescope selon la revendication 1, dans lequel ledit filtre (46) est un filtre compris dans l'ensemble des filtres statistiques et de Kalman.

3. Procédé d'estimation de la ligne de visée d'un télescope selon l'une quelconque des revendications 1 à 2, dans lequel la mesure différentielle à bruit réduit de la ligne de visée du télescope (6) est acquise à une fréquence comprise entre 0,01 Hz et 10 kHz.

4. Procédé d'estimation de la ligne de visée d'un télescope selon l'une quelconque des revendications 1 à 3, comprenant en outre une étape d'estimation (110) précise et absolue de plusieurs mesures non fusionnées ou d'une mesure fusionnée de l'évolution temporelle de la ligne de visée du télescope en ajoutant le ou les biais angulaire(s) estimé(s), existant(s) entre la ligne de visée réelle du télescope et l'attitude réelle du satellite définie par l'orientation du trièdre de référence SCAO, à l'attitude de la plateforme (4), mesurée régulièrement et de manière absolue par le SCAO, sous la forme de mesures différentes non fusionnées ou la forme d'une mesure fusionnée.

5. Procédé d'estimation de la ligne de visée d'un télescope selon la revendication 4, comprenant en outre une étape supplémentaire de fusion des mesures non fusionnées de l'évolution temporelle de la ligne de visée du télescope dans laquelle est fournie une unique estimation fusionnée de la ligne de visée du télescope.

6. Procédé d'estimation de la ligne de visée d'un télescope selon l'une quelconque des revendications 1 à 3, comprenant en outre :
une étape d'estimation précise et absolue de plusieurs mesures non fusionnées ou d'une mesure fusionnée de l'évolution temporelle de la ligne de visée du télescope en ajoutant le ou les biais angulaire(s) estimé(s), existant(s) entre la ligne de visée réelle du télescope et l'attitude réelle du satellite, définie par l'orientation du trièdre (20) de référence SCAO, à l'attitude de la plateforme (4), mesurée régulièrement et de manière absolue par le SCAO, sous la forme de mesures différentes non fusionnées ou la forme d'une mesure fusionnée, avec un filtrage du bruit haute fréquence par hybridation.

7. Procédé d'estimation de la ligne de visée d'un télescopes selon la revendication 6, comprenant en outre une étape supplémentaire de fusion des mesures non fusionnées filtrées de l'évolution temporelle de la ligne de visée du télescope dans laquelle est fournie une unique estimation fusionnée filtrée de la ligne de visée du télescope.

8. Procédé d'estimation de la ligne de visée d'un télescope selon l'une des revendications 4 à 7, comprenant en outre :
une étape de stabilisation (112) de la ligne de visée du télescope mise en oeuvre à l'aide des actionneurs (22) seuls du SCAO, ou d'un miroir de changement de ligne de visée du télescope (206) dont le positionnement est contrôlable par des commandes, ou de l'action conjointe des actionneurs du SCAO et d'un miroir,
les commandes des actionneurs (22) du SCAO et/ou du miroir de changement de ligne de visée étant fonction de l'évolution temporelle de la ligne de visée du télescope estimée précisément et de façon absolue et d'un profil de consigne de ligne de visée.

9. Procédé d'estimation de la ligne de visée d'un télescope selon l'une des revendications 4 à 7, comprenant en outre :
une étape de stabilisation (112) de la ligne de visée du télescope mise en oeuvre à l'aide des actionneurs (22) seuls du SCAO, ou d'un miroir de changement de ligne de visée du télescope (206) dont le positionnement est contrôlable par des commandes, ou de l'action conjointe des actionneurs du SCAO et d'un miroir,
l'évolution temporelle de la ligne de visée du télescope estimée précisément et de façon absolue et un profil de consigne de ligne de visée étant uniquement pris en considération lors du traitement des images du servie d'observation à bord du satellite ou au sol.

10. Procédé d'estimation de la ligne de visée d'un télescope selon l'une quelconque des revendications 1 à 9, comprenant en outre :
une étape d'estimation (114) précise et absolue de la ligne de visée du télescope en utilisant une prise de vue d'étoiles ou d'un amer sous la forme d'une image suivi d'une comparaison de la position dans l'image desdites étoiles ou dudit amer avec l'attitude estimée par le SCAO.

11. Procédé d'estimation de la ligne de visée d'un télescope selon l'une quelconque des revendications 1 à 9, dans lequel
- l'étape de détermination régulière suivant la deuxième cadence de mesure d'une mesure différentielle à bruit réduit de la ligne de visée du télescope (6 ; 206 ; 306) utilise un détecteur matriciel et compare une succession d'images d'une image à l'autre ; ou
- l'étape de détermination régulière suivant la deuxième cadence de mesure d'une mesure différentielle à bruit réduit de la ligne de visée du télescope (6 ; 206 ; 306) utilise des détecteurs de type barrettes ou TDI pour une image défilante et utilise une zone inter-barrette, une partie des barettes étant situées de sorte que le même point dans une scène est imagé lors du défilement par deux barrettes différentes à un intervalle de temps près.

12. Satellite d'observation de la Terre comprenant une plateforme (4), un télescope (6 ; 206 ; 306), et un système de contrôle d'attitude et d'orbite SCAO (8) de la plateforme (4),
le système de contrôle d'attitude et d'orbite SCAO (8) de la plateforme comportant
- un premier ensemble (12 ; 312) d'au moins un senseur(s) stellaire(s) (14, 16, 18 ; 314, 316, 318) fournissant une ou plusieurs mesures d'attitude de la plateforme (4) ; et
- des actionneurs (22) pour orienter la plateforme (4) ; et
- un premier calculateur (24) configuré pour, à partir de la ou des plusieurs mesures d'attitudes, fournies par le ou les senseurs stellaires (14, 16, 18 ; 314, 316, 318), éventuellement fusionner les mesures en une mesure fusionnée déterminer l'évolution de l'attitude du satellite, et élaborer des commandes d'actionneurs pour suivre un profil souhaité d'évolution de l'attitude de la plateforme (4) en fonction du temps ; et le télescope (6 ; 206 ; 306) comportant :
- un deuxième ensemble (32) d'au moins un détecteur(s) d'imagerie (34) ; et
- un deuxième calculateur (44), différent du premier calculateur (24) ou fusionné avec le premier calculateur, configuré pour déterminer une mesure de bougé angulaire relatif du télescope (6 ; 206 ; 306) à partir d'une paire d'images acquises par au moins un détecteur d'imagerie (34) ;
le satellite d'observation étant **caractérisé en ce qu'**il comprend en outre un filtre (46) et **en ce que** :
- le système de contrôle d'attitude et d'orbite SCAO (8) est configuré pour, à partir d'un premier instant t1, mesurer (104) régulièrement et de manière absolue l'attitude bruitée de la plateforme suivant une première cadence de mesure compatible avec le contrôle d'attitude de la plateforme, les besoins de restitution de la ligne de visée et la mesure de bias angulaire entre la ligne de visée réelle du télescope (6) et l'attitude réelle du satellite (2) définie par l'orientation d'un trièdre (20) de référence SCAO, et
- le deuxième calculateur du télescope (6 ; 206 ; 306) est configuré pour, à partir d'un deuxième instant t2 et en parallèle, déterminer (106) régulièrement suivant une deuxième cadence de mesure, compatible avec la mesure du biais angulaire existant entre la ligne de visée réelle du télescope et l'attitude réelle du satellite définie par l'orientation du trièdre (20) de référence SCAO, et optionnellement avec les besoins de restitution de la ligne de visée du télescope, une mesure différentielle à bruit réduit de la ligne de visée du télescope à partir d'une paire d'images présentant une zone commune et non uniforme, acquises par l'au moins un détecteur d'imagerie, c'est-à-dire une mesure de bougé angulaire relatif à bruit réduit du télescope, et
- le filtre (46) est configuré pour, à partir d'un troisième instant t3, postérieur ou égal aux premier et deuxième instants t1 et t2, estimer (108) régulièrement le ou les biais angulaire(s) existant(s) entre la ligne de visée réelle du télescope et l'attitude réelle du satellite définie par l'orientation du trièdre de référence SCAO par une comparaison de la mesure relative très précise de la ligne de visée du télescope (6) aux mesures non fusionnées absolues ou à la mesure fusionnée absolue de l'attitude de la plateforme.

13. Satellite d'observation selon la revendication 12, dans lequel le filtre (46) est compris dans l'ensemble des filtres statistiques et de Kalman, et la mesure différentielle à bruit réduit de la ligne de visée du télescope (6) est acquise à une fréquence comprise entre 0,01 Hz et 10 kHz.

14. Satellite d'observation selon l'une quelconque des revendications 12 à 13, dans lequel le filtre (46) est configuré pour estimer précisément et de façon absolue plusieurs mesures non fusionnées ou une mesure fusionnée de l'évolution temporelle de ligne de visée du télescope en ajoutant le ou les biais angulaire(s) estimé(s), existant(s) entre la ligne de visée réelle du télescope et l'attitude réelle du satellite définie par l'orientation du trièdre de référence SCAO, à l'attitude de la plateforme (6), mesurée régulièrement et de manière absolue par le SCAO, sous la forme de mesures différentes non fusionnées ou la forme d'une mesure fusionnée.

15. Satellite d'observation selon la revendication 14, comprenant en outre un filtre supplémentaire pour fusionner des mesures non fusionnées de l'évolution temporelle de la ligne de visée du télescope dans laquelle est fournie une unique estimation fusionnée de la ligne de visée du télescope.

16. Satellite d'observation selon l'une quelconque des revendications 12 à 14, dans lequel le deuxième ensemble (32) d'au moins un détecteur(s) d'imagerie (34) comporte un détecteur matriciel, utilisé par le deuxième calculateur du télescope pour comparer une succession d'images d'une image à l'autre lors de la mise en oeuvre de la détermination régulière suivant la deuxième cadence de mesure d'une mesure différentielle à bruit réduit de la ligne de visée du télescope ; ou
le deuxième ensemble (32) d'au moins un détecteur(s) d'imagerie (34) comporte des détecteurs de type barrette ou TDI, utilisés par le deuxième calculateur en mode d'image défilante dans une zone inter-barrettes, c'est à dire une partie des barrettes située de sorte que le même point dans la scène est imagé lors du défilement par deux barrettes différentes à un intervalle de temps près lors de la mise en oeuvre de la détermination régulière suivant la deuxième cadence de mesure d'une mesure différentielle à bruit réduit de la ligne de visée du télescope.

17. Satellite d'observation selon l'une quelconque des revendications 12 à 16, dans lequel :
- le système de contrôle d'attitude et d'orbite SCAO (8) de la plateforme comporte un troisième ensemble (62) d'au moins un gyroscope pour mesurer au moins une vitesse angulaire de la plateforme (4) du satellite, et
- le système de contrôle d'attitude et d'orbite SCAO (8) est configuré pour, à partir du premier instant, mesurer régulièrement et de manière absolue une attitude et une vitesse angulaire bruitée de la plateforme à l'aide du ou des senseurs stellaires et du ou des gyroscopes du troisième ensemble (62) suivant une première cadence de mesure compatible avec le contrôle d'attitude de la plateforme, les besoins de restitution de la ligne de visée et la mesure de biais angulaire entre la ligne de visée réelle du télescope (6) et l'attitude réelle du satellite (2) définie par l'orientation du trièdre (20) de référence SCAO.

18. Satellite d'observation selon l'une quelconque des revendications 12 à 17, dans lequel le télescope comporte un quatrième ensemble d'au moins un gyroscope pour mesurer au moins une vitesse angulaire du télescope, et le deuxième calculateur du télescope est configuré pour à partir du deuxième instant t2, déterminer suivant la deuxième cadence de mesure une mesure inertielle de bougé angulaire relatif à bruit réduit du télescope, complémentaire à la mesure optique de bougé angulaire relatif obtenue à partir des paires d'images, et déterminer la mesure relative très précise de la ligne de visée du télescope en fonction de la mesure inertielle et la mesure optique de bougé angulaire relatif du télecope.

19. Satellite d'observation selon l'une quelconque des revendications 12 à 18, dans lequel le système de contrôle d'attitude et d'orbite SCAO (8) est configuré pour stabiliser la ligne de visée du télescope (6 ; 306) sous l'action de ses seuls actionneurs (22), les commandes des actionneurs du SCAO étant fonction de l'évolution temporelle de la ligne de visée du télescope estimée précisément et de façon absolue et d'un profil de consigne de la ligne de visée du télescope ; ou
le télescope (206) comporte un miroir de changement de ligne de visée du télescope dont le positionnement est contrôlable par des commandes et configuré pour stabiliser seul la ligne de visée du télescope (206), les commandes du miroir de changement de visée étant fonction de l'évolution temporelle de la ligne de visée du télescope estimée précisément et de façon absolue et d'un profil de consigne de la ligne de visée du télescope ; ou
le télescope (206) comporte un miroir de changement de ligne de visée du télescope dont le positionnement est contrôlable par des commandes, et la ligne de visée du télescope (206) est stabilisée sous l'action conjointe partagée des actionneurs (22) du SCAO et du miroir de changement de ligne de visée, les commandes des actionneurs (22) du SCAO et du miroir de changement de ligne de visée étant fonction de l'évolution temporelle de la ligne de visée du télescope estimée précisément et de façon absolue et d'un profil de consigne de ligne de visée.

20. Satellite d'observation selon l'une quelconque des revendications 12 à 16, dans lequel :
- le premier calculateur (24), le deuxième calculateur (44) et le filtre (46) sont des circuits électroniques différents et séparés ; ou
- le premier calculateur et le deuxième sont un même calculateur électronique, et filtre est un circuit électronique séparé ; ou
- le premier calculateur et le deuxième calculateur sont un même calculateur électronique, et le filtre est intégré dans ledit calculateur ; ou
- le premier calculateur et le deuxième calclulateur sont des circuits électroniques différents et le filtre est intégré dans le premier calculateur ; ou
- le premier calculateur et le deuxième calculateur sont des circuits électroniques différents et le filtre est intégré dans le second calculateur.

## Patentansprüche

1. Verfahren zum Schätzen der Sichtlinie eines Teleskops, das sich an Bord eines Erdbeobachtungssatelliten (2) befindet und einen Teil davon bildet,
wobei der das Verfahren implementierende Satellit (2) eine Plattform (4), ein Teleskop (6; 206; 306) und ein Lage- und Bahnregelungssystem (SCAO) (8) der Plattform (4) umfasst,
wobei das Lage- und Bahnregelungssystem SCAO (8) der Plattform (4) Folgendes aufweist:
- einen ersten Satz (12; 312) von mindestens einem Sternsensor (14, 16, 18, 314, 316, 318), der einen oder mehrere Messwerte der Lage der Plattform (4) bereitstellt; und
- Aktuatoren (22) zum Orientieren der Plattform (4); und
- einen ersten Rechner (24), konfiguriert zum Bestimmen, anhand des einen oder der mehreren von dem oder den Sternsensor(en) (14, 16, 18) bereitgestellten Lagemesswerten, der Entwicklung der Lage des Satelliten (2), und zum Ausarbeiten von Aktuatorenbefehlen, um einem gewünschten Entwicklungsprofil der Lage der Plattform (4) als Funktion der Zeit zu folgen; und
wobei das Teleskop (6; 206; 306) Folgendes aufweist:
- einen zweiten Satz (32) von mindestens einem Bildgebungsdetektor (34); und
- einen zweiten Rechner (44), der sich vom ersten Rechner (24) unterscheidet oder mit dem ersten Rechner (24) fusioniert ist, konfiguriert zum Bestimmen eines Maßes an relativer Winkelverwacklung des Teleskops (6; 206; 306) anhand eines Paares von von mindestens einem Bildgebungsdetektor (34) erfassten Bildern;
wobei das Verfahren zum Schätzen der Sichtlinie des Teleskops (6; 206; 306) **dadurch gekennzeichnet ist, dass** es die folgenden Schritte umfasst:
- regelmäßiges und absolutes Messen (104) durch das SCAO, ab einem ersten Zeitpunkt t1, der verrauschten Lage der Plattform (4) gemäß einer ersten Messrate, die mit der Lageregelung der Plattform, den Erfordernissen der Wiederherstellung der Sichtlinie und dem Maß an Winkelverzerrung zwischen der tatsächlichen Sichtlinie des Teleskops (6) und der tatsächlichen Lage des Satelliten (2), definiert durch die Orientierung eines SCAO-Referenztrieders (20), kompatibel ist, und parallel dazu regelmäßiges Bestimmen (106), ab einem zweiten Zeitpunkt t2, gemäß einer zweiten Messrate, die mit dem Maß an Winkelverzerrung, die zwischen der tatsächlichen Sichtlinie des Teleskops (6) und der tatsächlichen Lage des Satelliten (2) existiert, definiert durch die Orientierung des SCAO-Referenztrieders (20), und optional mit den Erfordernissen der Wiederherstellung der Sichtlinie des Teleskops, einer rauschreduzierten Differenzmessung der Sichtlinie des Teleskops (6) anhand eines Paares von Bildern mit einer gemeinsamen und nicht einheitlichen Zone, die von dem mindestens einen Bildgebungsdetektor (34) erfasst wurden, d. h. eine rauschreduzierte Messung der relativen Winkelverwacklung des Teleskops, kompatibel ist, anschließend
- regelmäßiges Schätzen, ab einem dritten Zeitpunkt t3, der auf oder hinter dem ersten und zweiten Zeitpunkt t1 und t2 liegt, unter Verwendung eines Filters (46), der Winkelverzerrung(en), die zwischen der tatsächlichen Sichtlinie des Teleskops (6) und der tatsächlichen Lage des Satelliten (2) existiert/existieren, definiert durch die Orientierung des SCAO-Referenztrieders (20), durch einen Vergleich der sehr genauen relativen Differenzmessung der Sichtlinie des Teleskops (6) mit den absoluten nicht fusionierten Messwerten oder dem absoluten fusionierten Messwert der Lage der Plattform (4).

2. Verfahren zum Schätzen der Sichtlinie eines Teleskops nach Anspruch 1, wobei das Filter (46) ein Filter aus der Gruppe der statistischen und Kalman-Filter ist.

3. Verfahren zum Schätzen der Sichtlinie eines Teleskops nach einem der Ansprüche 1 bis 2, wobei der rauschreduzierte Differenzmesswert der Sichtlinie des Teleskops (6) bei einer Frequenz zwischen 0,01 Hz und 10 kHz erfasst wird.

4. Verfahren zum Schätzen der Sichtlinie eines Teleskops nach einem der Ansprüche 1 bis 3, das ferner einen Schritt (110) des genauen und absoluten Schätzens mehrerer nicht fusionierter Messwerte oder eines fusionierten Messwerts der zeitlichen Entwicklung der Sichtlinie des Teleskops durch Hinzufügen der geschätzten Winkelverzerrung(en) umfasst, die zwischen der tatsächlichen Sichtlinie des Teleskops und der tatsächlichen Lage des Satelliten existiert/existieren, definiert durch die Orientierung des SCAO-Referenztrieders, zu der vom SCAO regelmäßig und absolut gemessenen Lage der Plattform (4) in Form von verschiedenen, nicht fusionierten Messwerten oder in Form eines fusionierten Messwerts.

5. Verfahren zum Schätzen der Sichtlinie eines Teleskops nach Anspruch 4, das ferner einen zusätzlichen Schritt des Fusionierens der nicht fusionierten Messwerte der zeitlichen Entwicklung der Sichtlinie des Teleskops umfasst, in dem ein einziger fusionierter Schätzwert der Sichtlinie des Teleskops bereitgestellt wird.

6. Verfahren zum Schätzen der Sichtlinie eines Teleskops nach einem der Ansprüche 1 bis 3, das ferner Folgendes umfasst:
einen Schritt des genauen und absoluten Schätzens mehrerer nicht fusionierter Messwerte oder eines fusionierten Messwerts der zeitlichen Entwicklung der Sichtlinie des Teleskops durch Hinzufügen der geschätzten Winkelverzerrung(en), die zwischen der tatsächlichen Sichtlinie des Teleskops und der tatsächlichen Lage des Satelliten existiert/existieren, definiert durch die Orientierung des SCAO-Referenztrieders (20), zu der vom SCAO regelmäßig und absolut gemessenen Lage der Plattform (4) in Form von verschiedenen, nicht fusionierten Messwerten oder in Form eines fusionierten Messwerts mit einer Filterung des Hochfrequenzrauschens durch Hybridisierung.

7. Verfahren zum Schätzen der Sichtlinie eines Teleskops nach Anspruch 6, das ferner einen zusätzlichen Schritt des Fusionierens der gefilterten, nicht fusionierten Messwerte der zeitlichen Entwicklung der Sichtlinie des Teleskops umfasst, in dem eine einzige gefilterte fusionierte Schätzung der Sichtlinie des Teleskops bereitgestellt wird.

8. Verfahren zum Schätzen der Sichtlinie eines Teleskops nach einem der Ansprüche 4 bis 7, das ferner Folgendes umfasst:
einen Schritt (112) des Stabilisierens der Sichtlinie des Teleskops, implementiert mit Hilfe von nur den Aktuatoren (22) des SCAO oder einem Spiegel zur Änderung der Sichtlinie des Teleskops (206), dessen Positionierung durch Befehle regelbar ist, oder durch die gemeinsame Wirkung der Aktuatoren des SCAO und eines Spiegels,
wobei die Befehle der Aktuatoren (22) des SCAO und/oder des Spiegels zur Änderung der Sichtlinie eine Funktion von der zeitlichen Entwicklung der Sichtlinie des Teleskops, die genau und absolut geschätzt wird, und von einem Sollprofil der Sichtlinie sind.

9. Verfahren zum Schätzen der Sichtlinie eines Teleskops nach einem der Ansprüche 4 bis 7, das ferner Folgendes umfasst:
einen Schritt (112) des Stabilisierens der Sichtlinie des Teleskops, implementiert mit Hilfe von nur den Aktuatoren (22) des SCAO oder einem Spiegel zur Änderung der Sichtlinie des Teleskops (206), dessen Positionierung durch Befehle regelbar ist, oder durch die gemeinsame Wirkung der Aktuatoren des SCAO und eines Spiegels,
wobei die zeitliche Entwicklung der genau und absolut geschätzten Sichtlinie des Teleskops und ein Sollprofil der Ziellinie nur bei der Verarbeitung der Bilder des Beobachtungsdienstes an Bord des Satelliten oder am Boden berücksichtigt werden.

10. Verfahren zum Schätzen der Sichtlinie eines Teleskops nach einem der Ansprüche 1 bis 9, das ferner Folgendes umfasst:
einen Schritt (114) des genauen und absoluten Schätzens der Sichtlinie des Teleskops unter Verwendung einer Aufnahme von Sternen oder einer Bake in Form eines Bildes, gefolgt von einem Vergleich der Position der Sterne oder der Bake im Bild mit der durch das SCAO geschätzten Lage.

11. Verfahren zum Schätzen der Sichtlinie eines Teleskops nach einem der Ansprüche 1 bis 9, wobei
- der Schritt des regelmäßigen Bestimmens gemäß der zweiten Messrate einer rauschreduzierten Differenzmessung der Sichtlinie des Teleskops (6; 206; 306) einen Matrixdetektor verwendet und eine Folge von Bildern von einem Bild zum anderen vergleicht; oder
- der Schritt des regelmäßigen Bestimmens gemäß der zweiten Messrate einer rauschreduzierten Differenzmessung der Sichtlinie des Teleskops (6; 206; 306) Detektoren des Streifen- oder TDI-Typs für ein Laufbild verwendet und eine Zwischenstreifenzone verwendet, wobei ein Teil der Streifen so positioniert ist, dass derselbe Punkt in einer Szene beim Laufen von zwei verschiedenen Streifen in einem nahen zeitlichen Abstand abgebildet wird.

12. Erdbeobachtungssatellit, der eine Plattform (4), ein Teleskop (6; 206; 306) und ein Lage- und Bahnregelungssystem (SCAO) (8) der Plattform (4) umfasst,
wobei das Lage- und Bahnregelungssystem (SCAO) (8) der Plattform Folgendes umfasst:
- einen ersten Satz (12; 312) von mindestens einem Sternsensor (14, 16, 18; 314, 316, 318), der einen oder mehrere Messwerte der Lage der Plattform (4) bereitstellt; und
- Aktuatoren (22) zum Orientieren der Plattform (4); und
- einen ersten Rechner (24), konfiguriert zum eventuellen Fusionieren, anhand des einen oder der mehreren von dem oder den Sternsensor(en) (14, 16, 18; 314, 316, 318) bereitgestellten Lagemesswerten, der Messwerte zu einem fusionierten Messwert, Bestimmen der Entwicklung der Lage des Satelliten, und Ausarbeiten von Aktuatorenbefehlen, um einem gewünschten Entwicklungsprofil der Lage der Plattform (4) als Funktion der Zeit zu folgen; und wobei das Teleskop (6; 206; 306) Folgendes aufweist:
- einen zweiten Satz (32) von mindestens einem Bildgebungsdetektor (34); und
- einen zweiten Rechner (44), der sich vom ersten Rechner (24) unterscheidet oder mit dem ersten Rechner fusioniert ist, konfiguriert zum Bestimmen eines Messwerts der relativen Winkelverwacklung des Teleskops (6; 206; 306) anhand eines Paars von Bildern, die von mindestens einem Bildgebungsdetektor (34) erfasst werden;
wobei der Beobachtungssatellit **dadurch gekennzeichnet ist, dass** er ferner ein Filter (46) umfasst, und dadurch, dass:
- das Lage- und Bahnregelungssystem SCAO (8) zum regelmäßigen und absoluten Messen (104), ab einem ersten Zeitpunkt t1, der verrauschten Lage der Plattform gemäß einer ersten Messrate konfiguriert ist, die mit der Regelung der Lage der Plattform, den Erfordernissen der Wiederherstellung der Sichtlinie und dem Maß an Winkelverzerrung zwischen der tatsächlichen Sichtlinie des Teleskops (6) und der tatsächlichen Lage des Satelliten (2), definiert durch die Orientierung eines SCAO-Referenztrieders (20), kompatibel ist, und
- der zweite Rechner des Teleskops (6; 206 ; 306) zum regelmäßigen Bestimmen (106), ab einem zweiten Zeitpunkt t2, und parallel dazu, gemäß einer zweiten Messrate, die mit dem Maß an Winkelverzerrung, die zwischen der tatsächlichen Sichtlinie des Teleskops und der tatsächlichen Lage des Satelliten existiert, definiert durch die Orientierung des SCAO-Referenztrieders (20), und optional mit den Erfordernissen der Wiederherstellung der Sichtlinie des Teleskops, einer rauschreduzierten Differenzmessung der Sichtlinie des Teleskops anhand eines Paares von Bildern mit einer gemeinsamen und nicht einheitlichen Zone, die von dem mindestens einen Bildgebungsdetektor erfasst wurden, d. h. eine rauschreduzierte Messung der relativen Winkelverwacklung des Teleskops kompatibel ist, und
- das Filter (46) zum regelmäßigen Schätzen (108), ab einem dritten Zeitpunkt t3, der auf oder hinter dem ersten und zweiten Zeitpunkt t1 und t2 liegt, der Winkelverzerrung(en), die zwischen der tatsächlichen Sichtlinie des Teleskops und der tatsächlichen Lage des Satelliten existiert/existieren, definiert durch die Orientierung des SCAO-Referenztrieders, durch einen Vergleich des sehr genauen relativen Messwerts der Sichtlinie des Teleskops (6) mit den absoluten nicht fusionierten Messwerten oder dem absoluten fusionierten Messwert der Lage der Plattform konfiguriert ist.

13. Beobachtungssatellit nach Anspruch 12, wobei das Filter (46) zur Gruppe der statistischen und Kalman-Filter gehört, und der rauschreduzierte Differenzmesswert der Sichtlinie des Teleskops (6) bei einer Frequenz zwischen 0,01 Hz und 10 kHz erfasst wird.

14. Beobachtungssatellit nach einem der Ansprüche 12 bis 13, wobei das Filter (46) zum genauen und absoluten Schätzen mehrerer nicht fusionierter Messwerte oder eines fusionierten Messwerts der zeitlichen Entwicklung der Sichtlinie des Teleskops durch Hinzufügen der Winkelverzerrung(en), die zwischen der tatsächlichen Sichtlinie des Teleskops und der tatsächlichen Lage des Satelliten existiert/existieren, definiert durch die Orientierung des SCAO-Referenztrieders, zu der vom SCAO regelmäßig und absolut gemessenen Lage der Plattform (6) in Form von verschiedenen nicht fusionierten Messwerten oder in Form eines fusionierten Messwerts konfiguriert ist.

15. Beobachtungssatellit nach Anspruch 14, der ferner ein zusätzliches Filter zum Fusionieren von nicht fusionierten Messwerten der zeitlichen Entwicklung der Sichtlinie des Teleskops umfasst, in der eine einzige fusionierte Schätzung der Sichtlinie des Teleskops bereitgestellt wird.

16. Beobachtungssatellit nach einem der Ansprüche 12 bis 14, wobei der zweite Satz (32) von mindestens einem Bildgebungsdetektor (34) einen Matrixdetektor aufweist, der vom zweiten Rechner des Teleskops zum Vergleichen einer Folge von Bildern von einem Bild zum anderen beim Implementieren des regelmäßigen Bestimmens einer rauschreduzierten Differenzmessung der Sichtlinie des Teleskops gemäß der zweiten Messrate verwendet wird; oder
der zweite Satz (32) von mindestens einem Bildgebungsdetektor (34) Detektoren vom Streifen- oder TDI-Typ aufweist, die vom zweiten Rechner im Bildlaufmodus in einer Zwischenstreifenzone verwendet werden, d. h. ein Teil der Streifen, der so positioniert ist, dass derselbe Punkt in der Szene beim Laufen von zwei verschiedenen Streifen in einem nahen zeitlichen Abstand beim Implementieren des regelmäßigen Bestimmens gemäß der zweiten Messrate einer rauschreduzierten Differenzmessung der Sichtlinie des Teleskops abgebildet wird.

17. Beobachtungssatellit nach einem der Ansprüche 12 bis 16, wobei:
- das Lage- und Bahnregelungssystem SCAO (8) der Plattform einen dritten Satz (62) aus mindestens einem Gyroskop zum Messen mindestens einer Winkelgeschwindigkeit der Plattform (4) des Satelliten aufweist, und
- das Lage- und Bahnregelungssystem SCAO (8) zum regelmäßigen und absoluten Messen, ab dem ersten Zeitpunkt, einer Lage und einer verrauschten Winkelgeschwindigkeit der Plattform mit Hilfe des oder der Sternsensoren und des oder der Gyroskope des dritten Satzes (62) gemäß einer ersten Messrate konfiguriert ist, die mit der Lageregelung der Plattform, den Erfordernissen der Wiederherstellung der Sichtlinie und dem Messwert der Winkelverzerrung zwischen der tatsächlichen Sichtlinie des Teleskops (6) und der tatsächlichen Lage des Satelliten (2), definiert durch die Orientierung des SCAO-Referenztrieders (20), kompatibel ist.

18. Beobachtungssatellit nach einem der Ansprüche 12 bis 17, wobei das Teleskop einen vierten Satz aus mindestens einem Gyroskop aufweist, um mindestens eine Winkelgeschwindigkeit des Teleskops zu messen, und der zweite Rechner des Teleskops zum Bestimmen, ab dem zweiten Zeitpunkt t2, gemäß der zweiten Messrate, eines rauschreduzierten Trägheitsmesswerts der relativen Winkelverwacklung des Teleskops, komplementär zu dem aus den Bildpaaren erhaltenen optischen Messwert der relativen Winkelverwacklung, und zum Bestimmen des sehr genauen relativen Messwerts der Sichtlinie des Teleskops in Abhängigkeit vom Trägheitsmesswert und dem optischen Messwert der relativen Winkelverwacklung des Teleskops konfiguriert ist.

19. Beobachtungssatellit nach einem der Ansprüche 12 bis 18, wobei das Lage- und Bahnregelungssystem SCAO (8) zum Stabilisieren der Sichtlinie des Teleskops (6; 306) durch die Wirkung seiner einzigen Aktuatoren (22) konfiguriert ist, wobei die Befehle der Aktuatoren des SCAO eine Funktion von der zeitlichen Entwicklung der genau und absolut geschätzten Sichtlinie des Teleskops und von einem Sollprofil der Sichtlinie des Teleskops sind; oder
das Teleskop (206) einen Spiegel zur Änderung der Sichtlinie des Teleskops aufweist, dessen Positionierung durch Befehle regelbar ist und der zum Stabilisieren nur der Sichtlinie des Teleskops (206) konfiguriert ist, wobei die Befehle des Spiegels zur Änderung der Sicht eine Funktion von der zeitlichen Entwicklung der genau und absolut geschätzten Sichtlinie des Teleskops und von einem Sollprofil der Sichtlinie des Teleskops sind; oder
das Teleskop (206) einen Spiegel zur Änderung der Sichtlinie des Teleskops aufweist, dessen Positionierung durch Befehle regelbar ist, und die Sichtlinie des Teleskops (206) unter der gemeinsamen geteilten Wirkung der Aktuatoren (22) des SCAO und des Spiegels zur Änderung der Sichtlinie stabilisiert wird, wobei die Befehle der Aktuatoren (22) des SCAO und des Spiegels zur Änderung der Sichtlinie eine Funktion von der zeitlichen Entwicklung der genau und absolut geschätzten Sichtlinie des Teleskops und von einem Sollprofil der Sichtlinie sind.

20. Beobachtungssatellit nach einem der Ansprüche 12 bis 16, wobei:
- der erste Rechner (24), der zweite Rechner (44) und das Filter (46) unterschiedliche und separate elektronische Schaltungen sind; oder
- der erste Rechner und der zweite derselbe elektronische Rechner sind, und das Filter eine separate elektronische Schaltung ist; oder
- der erste Rechner und der zweite Rechner derselbe elektronische Rechner sind, und das Filter in den Rechner integriert ist; oder
- der erste Rechner und der zweite Rechner unterschiedliche elektronische Schaltungen sind und das Filter in den ersten Rechner integriert ist; oder
- der erste Rechner und der zweite Rechner unterschiedliche elektronische Schaltungen sind und das Filter in den zweiten Rechner integriert ist.

## Claims

1. A method for estimating the line of sight of a telescope which is on board and part of an earth observation satellite (2),
the satellite (2) carrying out the method comprising a platform (4), a telescope (6; 206; 306) and an attitude and orbit control system AOCS (8) of the platform (4),
the attitude and orbit control system AOCS (8) of the platform (4) having:
- a first set (12; 312) of at least one star sensor (14, 16, 18, 314, 316, 318) providing one or more measurements of the attitude and the platform (4); and
- actuators (22) for orientating the platform (4); and
- a first computer (24) which is configured, from the one or more attitude measurements provided by the star sensor(s) (14, 16, 18), to determine the development of the attitude of the satellite (2), and to elaborate actuator instructions to follow a desired development profile of the attitude of the platform (4) as a function of time; and
the telescope (6; 206; 306) having:
- a second set (32) of at least one imaging detector (34); and
- a second computer (44) which is different from the first computer (24) or which is merged with the first computer (24), which is configured to determine a measurement of relative angular shaking action of the telescope (6; 206; 306) from a pair of images acquired by at least one imaging detector (34);
the method for estimating the line of sight of the telescope (6; 206; 306) being **characterised in that** it comprises the following steps:
- starting from a first time t1, measuring (104) regularly and in an absolute manner through the AOCS the noise-affected attitude of the platform (4) in accordance with a first measurement rate which is compatible with the attitude control of the platform, the restoration requirements of the line of sight and the angular bias measurement between the actual line of sight of the telescope (6) and actual attitude of the satellite (2) defined by the orientation of an AOCS reference trihedron (20), and, in parallel, starting from a second time t2, determining (106) regularly in accordance with a second measurement rate which is compatible with the angular bias measurement existing between the actual line of sight of the telescope (6) and the actual attitude of the satellite (2) defined by the orientation of the AOCS reference trihedron (20), and optionally with the restoration requirements of the line of sight of the telescope, a reduced-noise differential measurement of the line of sight of the telescope (6) from a pair of images which have a common and non-uniform zone, which are acquired by the at least one imaging detector (34), that is to say, a measurement of relative angular shaking action with reduced noise of the telescope, then
- starting from a third time t3, after or identical to the first and second times t1 and t2, regularly estimating, using a filter (46), the angular bias(es) existing between the actual line of sight of the telescope (6) and the actual attitude of the satellite (2) defined by the orientation of the AOCS reference trihedron (20) by means of a comparison of the very precise relative differential measurement of the line of sight of the telescope (6) with the absolute non-merged measurements or the absolute merged measurement of the attitude of the platform (4).

2. The method for estimating the line of sight of a telescope according to claim 1, wherein said filter (46) is a filter comprised in the statistical and Kalman filter set.

3. The method for estimating the line of sight of a telescope according to claim 1 or 2, wherein the reduced-noise differential measurement of the line of sight of the telescope (6) is acquired at a frequency between 0.01 Hz and 10 kHz.

4. The method for estimating the line of sight of a telescope according to any one of claims 1 to 3, further comprising a step of precise and absolute estimation (110) of several non-merged measurements or a merged measurement of the time development of the line of sight of the telescope by adding the estimated angular bias(es) existing between the actual line of sight of the telescope and the actual attitude of the satellite defined by the orientation of the AOCS reference trihedron to the attitude of the platform (4) which is measured regularly and in an absolute manner by the AOCS in the form of different non-merged measurements or in the form of a merged measurement.

5. The method for estimating the line of sight of a telescope according to claim 4, further comprising an additional step of merging the non-merged measurements of the time development of the line of sight of the telescope in which a single merged estimate of the line of sight of the telescope is provided.

6. The method for estimating the line of sight of a telescope according to any one of claims 1 to 3, further comprising:
a step of precise and absolute estimation of several non-merged measurements or a merged measurement of the time development of the line of sight of the telescope by adding the estimated angular bias(es) existing between the actual line of sight of the telescope and the actual attitude of the satellite which is defined by the orientation of the AOCS reference trihedron (20) to the attitude of the platform (4) which is measured regularly and in an absolute manner by the AOCS, in the form of different non-merged measurements or in the form of a merged measurement, with a filtering of the highfrequency noise by means of hybridisation.

7. The method for estimating the line of sight of a telescope according to claim 6, further comprising an additional step of merging the filtered non-merged measurements of the time development of the line of sight of the telescope in which a single filtered merged estimate of the line of sight of the telescope is provided.

8. The method for estimating the line of sight of a telescope according to any one of claims 4 to 7, further comprising:
a step (112) of stabilisation of the line of sight of the telescope carried out using only actuators (22) of the AOCS or a mirror for changing the line of sight of the telescope (206), the positioning of which can be controlled by instructions or the joint action of the actuators of the AOCS and a mirror,
the instructions of the actuators (22) of the AOCS and/or the mirror for changing the line of sight being a function of the time development of the line of sight of the telescope which is estimated precisely and in an absolute manner and of a setpoint profile of the line of sight.

9. The method for estimating the line of sight of a telescope according to any one of claims 4 to 7, further comprising:
a step (112) of stabilising the line of sight of the telescope carried out using only the actuators (22) of the AOCS or a mirror for changing the line of sight of the telescope (206), the positioning of which can be controlled by instructions or the joint action of the actuators of the AOCS and of a mirror,
the time development of the line of sight of the telescope which is estimated precisely and in an absolute manner and a setpoint profile of the line of sight being taken into account only during the processing of the images of the observation service on-board the satellite or on the ground.

10. The method for estimating the line of sight of a telescope according to any one of claims 1 to 9, further comprising:
a step (114) of precise and absolute estimation of the line of sight of the telescope using a shot of stars or of a sea mark in the form of an image followed by a comparison of the position in the image of said stars or of said sea mark with the attitude estimated by the AOCS.

11. The method for estimating the line of sight of a telescope according to any one of claims 1 to 9, wherein
- the step of regular determination in accordance with the second measurement rate of a reduced-noise differential measurement of the line of sight of the telescope (6; 206; 306) uses a matrix detector and compares a succession of images from one image to another; or
- the step of regular determination in accordance with the second measurement rate of a reduced-noise differential measurement of the line of sight of the telescope (6; 206; 306) uses detectors of the bar or TDI type for a scrolling image and uses an inter-bar zone, some of the bars being located so that the same point in a scene is imaged during the scrolling by two different bars to within a close time range.

12. An earth observation satellite comprising a platform (4), a telescope (6; 206; 306) and an attitude and orbit control system AOCS (8) for the platform (4),
the attitude and orbit control system AOCS (8) of the platform comprising
- a first set (12; 312) of at least one star sensor (14, 16, 18; 314, 316, 318) providing one or more attitude measurements of the platform (4); and
- actuators (22) to orientate the platform (4); and
- a first computer (24) which is configured, from the one or more attitude measurements provided by the star sensor(s) (14, 16, 18; 314, 316, 318), to potentially merge the measurements into a merged measurement, determine the development of the attitude of the satellite, and to elaborate actuator instructions to follow a desired development profile of the attitude of the platform (4) as a function of time; and the telescope (6; 206; 306) having:
- a second set (32) of at least one imaging detector (34); and
- a second computer (44) which is different from the first computer (24) or merged with the first computer, which is configured to determine a measurement of the relative angular shaking action of the telescope (6; 206; 306) from a pair of images acquired by at least one imaging detector (34);
the observation satellite being **characterised in that** it further comprises a filter (46), and **in that**:
- the attitude and orbit control system AOCS (8) is configured, starting from a first time t1, to measure (104) regularly and in an absolute manner the noise-affected attitude of the platform in accordance with a first measurement rate which is compatible with the attitude control of the platform, the restoration requirements of the line of sight and the angular bias measurement between the actual line of sight of the telescope (6) and the actual attitude of the satellite (2) defined by the orientation of an AOCS reference trihedron (20), and
- the second computer of the telescope (6; 206; 306) is configured, starting from a second time t2 and in parallel, to determine (106) regularly in accordance with a second measurement rate which is compatible with the angular bias measurement existing between the actual line of sight of the telescope and the actual attitude of the satellite defined by the orientation of the AOCS reference trihedron (20) and optionally with the restoration requirements of the line of sight of the telescope, a reduced-noise differential measurement of the line of sight of the telescope from a pair of images which have a common and non-uniform zone, which are acquired by the at least one imaging detector, that is to say, a measurement of the reduced-noise relative angular shaking action of the telescope, and
- the filter (46) is configured, starting from a third time t3, after or identical to the first and second times t1 and t2, to estimate (108) regularly the angular bias(es) existing between the actual line of sight of the telescope and the actual attitude of the satellite defined by the orientation of the AOCS reference trihedron by a comparison of the very precise relative measurement of the line of sight of the telescope (6) with the absolute non-merged measurements or the absolute merged measurement of the attitude of the platform.

13. The observation satellite according to claim 12, wherein the filter (46) is comprised in the set of the statistical and Kalman filters, and the reduced-noise differential measurement of the line of sight of the telescope (6) is acquired at a frequency between 0.01 Hz and 10 kHz.

14. The observation satellite according to any one of claims 12 to 13, wherein the filter (46) is configured to estimate precisely and in an absolute manner several non-merged measurements or a merged measurement of the time development of the line of sight of the telescope by adding the estimated angular bias(es) existing between the actual line of sight of the telescope and the actual attitude of the satellite defined by the orientation of the AOCS reference trihedron to the attitude of the platform (6) which is measured regularly and in an absolute manner by the AOCS, in the form of different non-merged measurements or in the form of a merged measurement.

15. The observation satellite according to claim 14, further comprising an additional filter for merging non-merged measurements of the time development of the line of sight of the telescope in which a single merged estimate of the line of sight of the telescope is provided.

16. The observation satellite according to any one of claims 12 to 14, wherein the second set (32) of at least one imaging detector (34) has a matrix detector, which is used by the second computer of the telescope to compare a succession of images from one image to another when the regular determination is carried out in accordance with the second measurement rate of a reduced-noise differential measurement of the line of sight of the telescope; or
the second set (32) of at least one imaging detector (34) has detectors of the bar or TDI type which are used by the second computer in image scrolling mode in an inter-bar zone, that is to say, some of the bars located so that the same point in the scene is imaged during the scrolling by two different bars to within a close time range when the regular determination is carried out in accordance with the second measurement rate of a reduced-noise differential measurement of the line of sight of the telescope.

17. The observation satellite according to any one of claims 12 to 16, wherein:
- the attitude and orbit control system AOCS (8) of the platform has a third set (62) of at least one gyroscope to measure at least one angular speed of the platform (4) of the satellite, and
- the attitude and orbit control system AOCS (8) is configured, starting from a first time, to measure regularly and in an absolute manner, an attitude and a noise-affected angular speed of the platform using the star sensor(s) and the gyroscope(s) of the third set (62) in accordance with a first measurement rate which is compatible with the attitude control of the platform, the restoration requirements of the line of sight and the measurement of angular bias between the actual line of sight of the telescope (6) and the actual attitude of the satellite (2) defined by the orientation of the AOCS reference trihedron (20).

18. The observation satellite according to any one of claims 12 to 17, wherein the telescope has a fourth set of at least one gyroscope to measure at least one angular speed of the telescope, and the second computer of the telescope is configured, starting from the second time t2, to determine in accordance with the second measurement rate an inertial measurement of the reduced-noise relative angular shaking action of the telescope which complements the optical measurement of the relative angular shaking action obtained from the pairs of images, and to determine the very precise relative measurement of the line of sight of the telescope depending on the inertial measurement and the optical measurement of the relative angular shaking action of the telescope.

19. The observation satellite according to any one of claims 12 to 18, wherein the attitude and orbit control system AOCS (8) is configured to stabilise the line of sight of the telescope (6; 306) under the action of its only actuators (22), the instructions of the actuators of the AOCS being a function of the time development of the line of sight of the telescope which is estimated precisely and in an absolute manner and of a setpoint profile of the line of sight of the telescope; or
the telescope (206) has a mirror for changing the line of sight of the telescope, the positioning of which can be controlled by instructions and is configured to stabilise only the line of sight of the telescope (206), the instructions of the mirror for changing the line of sight being a function of the time development of the line of sight of the telescope which is estimated precisely and in an absolute manner and of a setpoint profile of the line of sight of the telescope; or
the telescope (206) has a mirror for changing the line of sight of the telescope, the positioning of which can be controlled by instructions, and the line of sight of the telescope (206) is stabilised under the shared joint action of the actuators (22) of the AOCS and of the mirror for changing the line of sight, the instructions of the actuators (22) of the AOCS and of the mirror for changing the line of sight being a function of the time development of the line of sight of the telescope which is estimated in a precise and absolute manner and of a setpoint profile of the line of sight.

20. The observation satellite according to any one of claims 12 to 16, wherein:
- the first computer (24), the second computer (44) and the filter (46) are different and separate electronic circuits; or
- the first computer and the second are the same electronic computer, and the filter is a separate electronic circuit; or
- the first computer and the second computer are the same electronic computer, and the filter is integrated in said computer; or
- the first computer and the second computer are different electronic circuits and the filter is integrated in the first computer; or
- the first computer and the second computer are different electronic circuits and the filter is integrated in the second computer.
